(19) Europäisches Patentamt
European Patent Office
Office européen des brevets

(11) **EP 3 805 454 A1**

(12) **EUROPEAN PATENT APPLICATION**
published in accordance with Art. 153(4) EPC

(43) Date of publication:
**14.04.2021 Bulletin 2021/15**

(51) Int Cl.:
**D21H 11/14** (2006.01)    **D21H 15/02** (2006.01)
**B82Y 30/00** (2011.01)

(21) Application number: **19810468.9**

(22) Date of filing: **17.05.2019**

(86) International application number:
**PCT/BR2019/050183**

(87) International publication number:
**WO 2019/227187 (05.12.2019 Gazette 2019/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.05.2018 BR 102018010864**

(71) Applicant: **Klabin S.A.**
**04538-132 São Paulo (BR)**

(72) Inventors:
• **PEREIRA DAMÁSIO, Renato Augusto**
**84275-000 Telêmaco Borba (BR)**
• **COELHO DOS SANTOS MUGUET SOARES, Marcelo**
**84275-000 Telêmaco Borba (BR)**

(74) Representative: **Tiburzi, Andrea et al**
**Barzanò & Zanardo Roma S.p.A.**
**Via Piemonte 26**
**00187 Roma (IT)**

(54) **PAPER AND PROCESS FOR MANUFACTURING PAPER USING MICROFIBRILLATED CELLULOSE IN THE CELLULOSE PULP**

(57)    The present invention relates to a papermaking process of kraft paper, sackraft or paperboard comprising adding 1.0 to 1.5% by weight of MFC with a preferred average diameter between 1 and 568 nanometers and starch ranging from 1.0 to 10.0 kg/ton, preferably 5.0 kg/ton, generating a pulp with higher concentration of microfibers and improved strength, and consequently, a final paper with grammage ranging from 60 to 440 g/m$^2$ and with improved strength properties for use in packaging materials.

Case A - Medium without application of microfibrillated cellulose (MFC) in pulp

Case B - Medium with application of microfibrillated cellulose (MFC) in pulp

**Figure 1**

EP 3 805 454 A1

## Description

### Technical Field

The present invention relates to a papermaking process comprising the addition of microfibrillated cellulose (MFC) to the cellulosic pulp, generating a paper of special grammage and improved mechanical strength properties. The present invention relates to the field of papermaking.

### Background of the Invention

Concerns about the environment gains prominence every day in the countries' agenda, which create laws to regulate the generation of waste and their destination. All this work derives from the awareness that it is necessary to use raw materials from renewable sources in industrial production processes.

The pulp and paper production chain is characterized by a high degree of investment and has significant presence in scale economy, since it is present from forest exploitation to commercialization.

The location of factories is linked to the concentration of forest assets, and there is a strong dependence between the production of raw material and the industrial process.

Thus, a papermaking process that decreases the dependence and extraction of raw material and confers greater mechanical strength to paper, produced with the use of microfibrillated cellulose (MFC) integrated to the papermaking process instead of using large amounts of additives, reduces losses, making the process less expensive and less harmful to the environment.

WO 2011/068457 relates to a process for producing paper or cardboard with improved grammage and strength, comprising a forming base containing cellulosic fibers wherein 2 to 15% by weight of cationic starch and 1 to 15% by weight of MFC are added, separately. It is reported that large amounts of starch will increase the strength of the paper produced, and MFC helps in its retention. However, this prior art document does not discuss about the grammage, nor about tests that prove the greater strength of the paper produced.

WO 2010/125247 relates to a method for producing an aqueous paper paste containing a cationic polyelectrolyte (as starch) and a nanofibrillated cellulose (whose definition encompasses MFC) to be used in the manufacture of paper and cardboard, through which they are obtained with high load content and good mechanical strength. 1.5% and 3% by weight of MFC were used to produce papers with grammage between 55 and 60 $g/m^2$. Thus, this prior art document describes a process that uses much larger amounts of MFC and produces papers with smaller grammage.

Finally, the paper "Cellulose nanofibrils-adsorption with poly (amideamine) epichlorohydrin studied by QCM-D and application to paper strength additive" (Ahola et al. Cellulose (2008) 15: 303-314) describes the increase in wet and dry strength of the paper as the concentration of microfibrillated cellulose increases. MFC was added at 1, 2, 4, 6, and 10% by weight of cellulosic pulp, yielding paper with a grammage of 60 $g/m^2$, that is, using much larger quantities of MFC and producing papers with smaller grammage.

While some prior art refers to the use of MFC in cellulosic pulp to increase physical and mechanical characteristics of the paper, such as resistance, none describes a process capable of producing high grammage if using very low amounts of MFC, thus evidencing the advantages of the proposed process regarding the low use of raw materials and the biorefinery concept.

The paper, in accordance with the present invention, has improved physical characteristics, such as strength and grammage. The paper is produced through the manufacturing process of cellulosic pulp containing from 1 to 1.5% MFC by weight of cellulosic pulp and starch in the range of 1.0 to 10.0 kg/ton, preferably 5.0 kg/ton, generating a final paper from that pulp in a paper production line having a grammage ranging from 60 $g/m^2$ to 440 $g/m^2$, and such process requires neither diluents nor additives in considerable amounts. Thus, a paper with better physical and mechanical characteristics is produced through this process, using smaller quantities of raw material. Moreover, the addition of MFC causes significant changes in the drain resistance of this pulp, as measured by °SR degree. The °SR degree is the measure of the drain resistance degree of the pulp, which increases with higher refinement loads of the cellulosic pulp. By adding MFC to the cellulosic pulp, the same behavior is observed, thus demonstrating one of the enhancements of the addition of MFC in partial replacement of the refining operation in a pulp mill.

### Summary of the Invention

In a first aspect, the present invention describes a paper containing microfibrillated cellulose with improved grammage and strength.

It is a first object of the present invention a paper containing microfibrillated cellulose with special grammage.

In a preferred embodiment, the grammage of the paper produced ranges from 60 to 440 $g/m^2$, and the amount of microfibrillated cellulose in the paper ranges from 1.0 to 1.5% of the paper mass.

Another feature of the invention involves the paper being of Kraft, sackraft, testliner, corrugated or board type.

In a second aspect, the present invention describes a papermaking process using MFC.

A second object of the present invention is a papermaking process comprising the addition of microfibrillated cellulose and starch to a cellulosic pulp.

In a preferred embodiment, microfibrillated cellulose is added in the amount of 1 to 1.5% by weight of cellulosic pulp and starch is added to the cellulosic pulp in the amount of 5.0 kg per ton of pulp.

Another characteristic of the claim is the fact that the cellulosic pulp used may be bleached, brown or mechanical.

These and other objects of the present invention will be detailed in the figures and description below.

## Brief Description of the Figures

Figure 1 shows a schematic representation of the difference between cellulose layers with and without MFC in their composition, thus evidencing the greater number of bonds between free hydroxyls.

Figure 2 shows the size distribution of (A) brown short fibers of cellulosic pulp in micrometers and (B) brown short fiber MFC in nanometers.

Figure 3 shows an optical microscopy image at 200x of magnitude (A) and another electron microscopy image at 23,900x of magnitude of the brown short fibers and of the MFC produced with that fiber, respectively.

Figure 4 shows the micrometer (A) size distribution of the brown long fibers in the cellulose pulp and in nanometer (B) of the MFC produced with this cellulose pulp.

Figure 5 shows an optical microscopy image at 100x of magnitude (A) and another electron microscopy image at 7,540x of magnitude of the brown long fibers and of the MFC produced with that cellulosic pulp, respectively.

Figure 6 shows the size distribution in (A) bleached short fibers in micrometers and the MFC and (B) produced from the bleached short fibers.

Figure 7 shows an optical microscopy image at 200x of magnitude (A) and another electron microscopy image at 33,000x of magnitude of the bleached short fibers and of the MFC produced with that pulp.

Figure 8 shows the variation of Schopper Riegler grade (°SR) with the increasing concentration of MFC in the cellulosic pulp for the production of kraftliner paper containing a mixture of long and short fibers, and which also represents the behavior of the addition of MFC in any type of kraft, semi-chemical or commercial cellulosic pulp.

Figure 9 shows the drainage behavior with increasing time and at different concentrations of MFC in the cellulose pulp for the production of kraftliner paper containing a mixture of long and short fibers.

Figure 10 shows the effect of MFC dosage on Schopper Riegler grade (°SR) in the level box and in the input box of an industrial paper machine over time.

Figure 11 shows the effect of MFC dosing on the vacuum of the *Couch* roll in an industrial paper machine over time.

Figure 12 shows the effect of MFC dosing on the vacuum of the *Turbair* system in an industrial paper machine over time.

Figure 13 shows the effect of MFC dosing on flat table retention in an industrial paper machine over time.

Figure 14 shows the effect of MFC dosing on turbidity of white water in an industrial paper machine over time.

Figure 15 shows the comparison of the tensile strength in the longitudinal direction of the reference paper with the paper produced with the cellulosic pulp with MFC in various batches.

Figure 16 shows the comparison of the tensile strength in the transverse direction of the reference paper with the paper produced with the cellulosic pulp with MFC in various batches.

Figure 17 shows the comparison of stretching in the longitudinal direction of the reference paper with the paper produced with the cellulosic pulp with MFC in various batches.

Figure 18 shows the comparison of stretching in the transverse direction of the reference paper with the paper produced with the cellulosic pulp with MFC in various batches.

Figure 19 shows the comparison of the *Tensile Energy Absorption* (TEA) in the longitudinal direction of the reference paper with the paper produced with the cellulosic pulp with MFC in various batches.

Figure 20 shows the comparison of the *Tensile Energy Absorption* (TEA) in the transverse direction of the reference paper with the paper produced with the cellulosic pulp with MFC in various batches.

Figure 21 shows the comparison of *Short Crush Test* (SCT) of the reference paper with the paper produced with the cellulosic pulp with MFC in various batches.

Figure 22 shows the comparison of *Ring Crush Test* (RCT) of the reference paper with the paper produced with the cellulosic pulp with MFC in various batches.

Figure 23 shows the comparison of bursting resistance of the reference paper with the paper produced with the cellulosic pulp with MFC in various batches.

Figure 24 shows the comparison of *Scott (Ply) Bond* of the reference paper with the paper produced with the cellulosic pulp with MFC in various batches.

Figure 25 shows the comparison of the resistance to airflow *(Gurley)* of the reference paper with the paper produced with the cellulosic pulp with MFC in various batches.

Figure 26 shows the comparison of the tear index for sackraft papers made with different Schopper Riegler degrees or °SR and with the addition of MFC at different levels.

Figure 27 shows the comparison of the tensile index for sackraft papers made with different Schopper Riegler degrees or °SR and with the addition of MFC at different levels.

Figure 28 shows the comparison of the burst index for sackraft papers made with different Schopper Riegler degrees or °SR and with the addition of MFC at different levels.

Figure 29 shows the comparison of *Tensile Energy Absorption* (TEA) for sackraft papers made with different *Schopper Riegler grades* or °SR and with the addition of MFC at different levels.

Figure 30 shows the comparison of stretching for sackraft papers made with different Schopper Riegler degrees or °SR and with the addition of MFC at different levels.

Figure 31 shows the comparison of resistance to airflow *(Gurley)* for sackraft papers made with different Schopper Riegler degrees or °SR and with the addition of MFC at different levels.

Figure 32 shows the comparison of drainage for sackraft papers made with different Schopper Riegler degrees or °SR and with the addition of MFC at different levels.

Figure 33 shows the comparison of tear for sackraft papers made with different grammages and with the addition of MFC at different levels.

Figure 34 shows the comparison of tensile strength for sackraft papers made with different grammages and with the addition of MFC at different levels.

Figure 35 shows the comparison of bursting for sackraft papers made with different grammages and with the addition of MFC at different levels.

Figure 36 shows the comparison of *Tensile Energy Absorption* (TEA) for sackraft papers made with different grammages and with the addition of MFC at different levels.

Figure 37 shows the comparison of stretching for sackraft papers made with different grammages and with the addition of MFC at different levels.

Figure 38 shows the comparison of resistance to airflow *(Gurley)* for sackraft papers made with different grammages and with the addition of MFC at different levels.

Figure 39 shows the comparison of addition of MFC at different levels with the Schopper Riegler degree or °SR of the cover layer of the paperboard manufactured.

Figure 40 shows the comparison of the Water Retention Value (WRV) or water retention value of the paperboard cover layer made with different concentrations of MFC added to the cellulosic pulp of that paperboard layer.

Figure 41 shows the comparison of drainage *(Drainage Freeness Retention* or DFR) of the paperboard cover layer made with different concentrations of MFC added to the cellulosic pulp of that paperboard layer.

Figure 42 shows the comparison of the tensile index (IT) of the paperboard cover layer made with different concentrations of MFC added to the cellulosic pulp of that paperboard layer.

Figure 43 shows the comparison of the burst index of the paperboard cover layer made with different concentrations of MFC added to the cellulosic pulp of that paperboard layer.

Figure 44 shows the comparison of the *Tensile Energy Absorption* (TEA) of the paperboard cover layer made with different concentrations of MFC added to the cellulosic pulp of that paperboard layer.

Figure 45 shows the comparison of the resistance to airflow *(Gurley)* of the paperboard cover layer made with different concentrations of MFC added to the cellulosic pulp of that paperboard layer.

Figure 46 shows the comparison of roughness of the paperboard cover layer made with different concentrations of MFC added to the cellulosic pulp of that paperboard layer.

Figure 47 shows the comparison of drain resistance (indicated by Schopper Riegler degree or °SR) of the middle layer of the paperboard made with different concentrations of MFC added to the cellulosic pulp of that paperboard layer.

Figure 48 shows the comparison of the *Water Retention Value* (WRV) or water retention value of the middle layer of the paperboard made with different concentrations of MFC added to the cellulosic pulp of that paperboard layer.

Figure 49 shows the comparison of drainage *(Drainage Freeness Retention* or DFR) of the middle layer of the paperboard made with different concentrations of MFC added to the cellulosic pulp of that paperboard layer.

Figure 50 shows the comparison of the tensile index (IT) of the paperboard middle layer made with different concentrations of MFC added to the cellulosic pulp of that paperboard layer.

Figure 51 shows the comparison of bursting of the paperboard middle layer made with different concentrations of MFC added to the cellulosic pulp of that paperboard layer.

Figure 52 shows the comparison of the *Tensile Energy Absorption* (TEA) of the paperboard middle layer made with different concentrations of MFC added to the cellulosic pulp of that paperboard layer.

Figure 53 shows the comparison of the resistance to airflow *(Gurley)* of the paperboard middle layer made with different concentrations of MFC added to the cellulosic pulp of that paperboard layer.

Figure 54 shows the comparison of the *Schopper Riegler* degree or °SR of the paperboard base layer made with different concentrations of MFC added to the cellulosic pulp of that paperboard layer.

Figure 55 shows the comparison of the Water Retention Value (WRV) or water retention value of the paperboard base layer made with different concentrations of MFC added to the cellulosic pulp of that paperboard layer.

Figure 56 shows the comparison of drainage *(Drainage Freeness Retention* or DFR) of the base layer of the paperboard made with different concentrations of MFC added to the cellulosic pulp of that paperboard layer.

Figure 57 shows the comparison of the tensile index (IT) of the paperboard base layer made with different concentrations of MFC added to the cellulosic pulp of that paperboard layer.

Figure 58 shows the comparison of bursting of the paperboard base layer made with different concentrations of MFC added to the cellulosic pulp of that paperboard layer.

Figure 59 shows the comparison of the *Tensile Energy Absorption* (TEA) of the paperboard base layer made with different concentrations of MFC added to the cellulosic pulp of that paperboard layer.

Figure 60 shows the comparison of the resistance to airflow *(Gurley)* of the paperboard base layer made with different concentrations of MFC added to the cellulosic pulp of that paperboard layer.

Figure 61 shows the comparison of the Schopper Riegler degree or °SR of the cellulosic pulp available in the market with different concentrations of MFC.

Figure 62 shows the comparison of the *Water Retention Value* (WRV) or water retention value of the cellulosic pulp available in the market with different concentrations of MFC.

Figure 63 shows the comparison of drainage *(Drainage Freeness Retention* or DFR) of the cellulosic pulp available in the market with different concentrations of MFC.

Figure 64 shows the comparison of the tensile index (IT) of the cellulosic pulp available in the market with different concentrations of MFC.

Figure 65 shows the comparison of bursting of the cellulosic pulp available in the market with different concentrations of MFC.

Figure 66 shows the comparison of the Tensile Energy Absorption (TEA) of the cellulosic pulp available in the market with different concentrations of MFC.

Figure 67 shows the comparison of resistance to airflow (Gurley) of the cellulosic pulp available in the market with different concentrations of MFC.

Figure 68 shows the comparison of stretching of the cellulosic pulp available in the market with different concentrations of MFC.

Figure 69 shows the comparison of tear of the cellulosic pulp available in the market with different concentrations of MFC.

Figure 70 shows the comparison of the *Modulus of Elasticity* (MOE) of the cellulosic pulp available in the market with different concentrations of MFC.

## Detailed Description of the Invention

The examples shown herein are intended only to illustrate some of the numerous embodiments of the present invention, and are not to be construed as limiting the scope of the present invention, but merely to exemplify the large number of possible embodiments.

Minor modifications in amounts or parameters that achieve the results proposed by the present invention should be regarded as within the scope of the invention.

Microfibrillated Cellulose (MFC)

Microfibrillated cellulose, microfibril cellulose, nanofibrillated cellulose or even nanofibers or nanocellulose are terms commonly found which refer to the entanglement of cellulosic fibrils with diameters in the range lower than 1,000 nm, and it has amorphous and crystalline zones composing its structure. MFC is characterized as a type of cellulose in which the microfibers are split into a larger number of microfibrils or even finer fibrils. This creates an increased surface area, granting new characteristics to the product. MFC is used in this invention primarily as a strength agent, for internal paper bonding and as a modifier of the physical paper structure.

MFC is typically derived from wood sources and is one of the most sustainable alternatives on the market. However, it can be produced from any cellulosic fiber source, be it mechanical, non-bleached and bleached, in addition to any biomass source derived from wood and non-wood.

The MFC surface area is the special characteristic of this substance: it is possible, with only one gram of MFC, to cover up to 200 $m^2$ of physical space. This characteristic is due to the large number of hydroxyl groups (-OH) available in microfibers, which are highly hydrophilic and capture near water. An MFC microfiber is capable of capturing 40 times more water than its own weight.

Since MFC is a highly hydrophilic material, it can act as an advanced rheology modifier, providing very interesting spray characteristics and exceptionally high viscosity at rest. MFC is known for its shearing and non-Newtonian behavior, and it also shows potential as a stabilizer, especially in stabilizing emulsions (water in oil or oil in water).

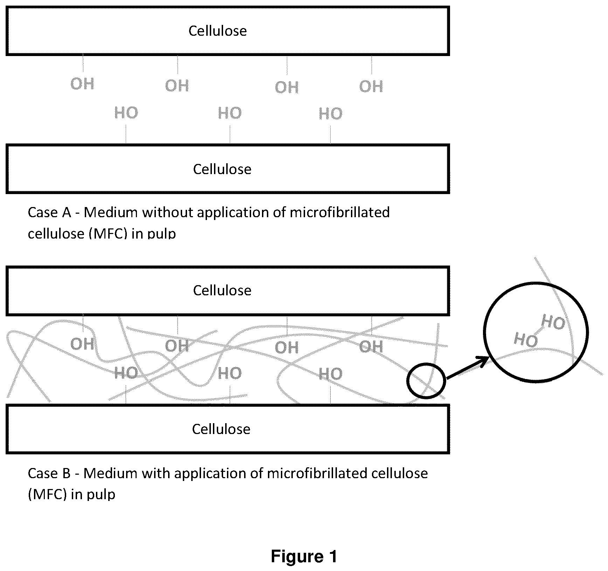

MFC is a large network of bonds between the paper layers, ensuring that the fiber-MFC-fiber bond interface between the layers of paper expresses its maximum potential due to the OH groups exposed (figure 1) and its high surface area. The MFC fills both the macro and the microporosity of the paper produced, changing the bond structure between the layers and forming a perfect bond.

The MFC multifunctionality also allows it to partially adopt additives and stabilizing ingredients, like surfactants. Moreover, MFC is potentially a strength additive. Due to these characteristics, there has been a growing interest in the use of MFC in applications such as coatings, adhesives, electronics, cosmetics and many others.

The MFC microfiber size is also important in determining its functionality. The increase of the microfiber length has beneficial effects on the tensile, elasticity and resistance properties of the composites in wood and paper.

MFC production

According to the present invention, the production of MFC can be subdivided into 5 major steps:

1. 1$^{st}$ dilution;
2. Treatment;
3. mechanical processing;
4. 2$^{nd}$ dilution; and
5. storage.

The first step consists in the dilution of the bleached or unbleached kraft pulp to 2% of consistency, which is ideal for MFC processing.

The second step is the chemical-enzymatic treatment. In this step, the preparation of the pulp for processing takes place. First, the pH of each container is adjusted to 6.0 using aluminum sulphate ($Al_2(SO_4)_3$). The pulp in neutral medium is heated to 35-40 °C for 50-60 minutes, and then treated with 125 g of enzyme per ton of dry pulp, with this enzyme belonging to the endoglucanase family. The product is kept dispersed for 25 minutes in a cowles shaker. After this period, the enzymatic action is halted by adjusting the pH to 13-14 with liquid soda (sodium hydroxide, NaOH) at a dosage of approximately 200g per ton of pulp.

The third step is the processing step, where the pulp is transferred to a vertical mechanical mill through a pump, and processed. The mill comprises aluminum oxide stone ($Al_2O_3$) at 2% cSt (*Consistency*). The process is carried out twice and it must be noted that, after the 1$^{st}$ grinding, whole fibers can still be visualized, but not in the second grinding, thus evidencing the micro/nano size scale of the fibers. The sizes of the microfibers produced after this step are shown in table 1, while table 2 shows the different characterization parameters of microfibers at 2% cst.

**Table 1** - Pulp diameter range and frequency of cellulosic microfibrills per production step:

| Sample | Diameter range | Frequency (%) |
|---|---|---|
| Pulp | | 90 |
| | | 47 |
| Treated pulp | (15-40) $\mu$m | 81 |
| | (-25) $\mu$m | 38 |
| 1$^{st}$ grinding | | 86 |
| | | 46 |
| 2$^{nd}$ grinding (0.25 g/L) | | 73 |
| | | 24 |
| 2$^{nd}$ grinding (0.05 g/L) | (50-250) nm | 76 |
| | (-50) nm | 23 |
| 2$^{nd}$ grinding (0.025 g/L) | | 51 |
| | | 48 |

Table 2 - Characterization parameters of the pulp and microfibers at 2% cSt:

| Parameter/Phase | Pulp | Treated pulp | 1st pass | 2nd pass |
|---|---|---|---|---|
| pH | 6.7 | 12.9 | 12.9 | 12.7 |
| Viscosity (cps) | 1123.5 | 689.3 | 2030.0 | 4893.3 |
| Turbidity (NTU) | 13.8 | 17.4 | 28.9 | 91.8 |

The fourth step is the step of diluting the pulp treated and processed in a tank until it reaches a 0.8% cSt consistency, with the pulp entering in and exiting from the filter via openings, and stirring with a blade motor to avoid sedimentation. The pulp is subsequently filtered through a 0.05 mm filter.

The fifth and final step is the storage, where the diluted pulp is directed to the appropriate tank under stirring.

The calculation of the theoretical energy consumption of the production of CFMs can be carried out using the following formula:

$$C = \frac{v.\,i.\,\sqrt{3}.\,fp}{P}$$

Where v is the tension (V), i is the mean current (A), fp is the power factor of a motor in horses (cv) and P is the production/hour (dry kg). The total energy expenditure is estimated at 7075.6 KW.h/t for the preparation of two tanks.

It must be noted that the present invention may be also carried out using only the step 3, of mechanical processing, to produce MFC, thereby reducing the energy expenditure of the process.

Characterization of MFC fibers used in cellulosic pulp

Cellulosic pulps are rich in fibers, but the fibers are not the only anatomical elements they possess. Fibers, fiber fragments, lignin, parenchyma cells and vessel elements are combined into a rich blend. A pulp containing all these organic components is considered a kraft pulp.

In order to purify a brown pulp by removing the other undesirable components (lignin, extractives and chromophores), bleaching is performed. Bleaching is the factory operation where cellulose pulp receives reductive and oxidative chemical treatments, followed by washes or not. These undesirable components are removed during the washes. It is desirable that the minimum degradation of the fibers occur during this process, both from the point of view of increasing profitability and from the point of view of strength. After bleaching, the pulp is considered white/bleached.

The present invention performed the characterization of the cellulosic fibers, both before and after bleaching. However, it should be noted that the present invention may use brown, bleached or mechanical pulps, depending on the type of paper to be produced. Practical examples, but not limited thereto, are the sackraft paper, which is produced with brown long fiber MFC, and paperboard, which is produced with bleached short fiber MFC in the cover layer and brown short fiber MFC in the medium and base layers.

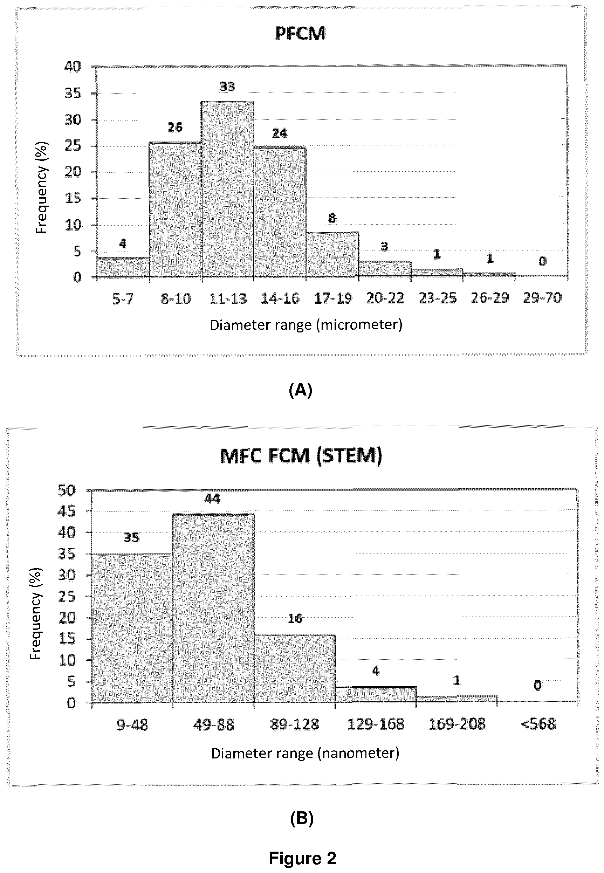

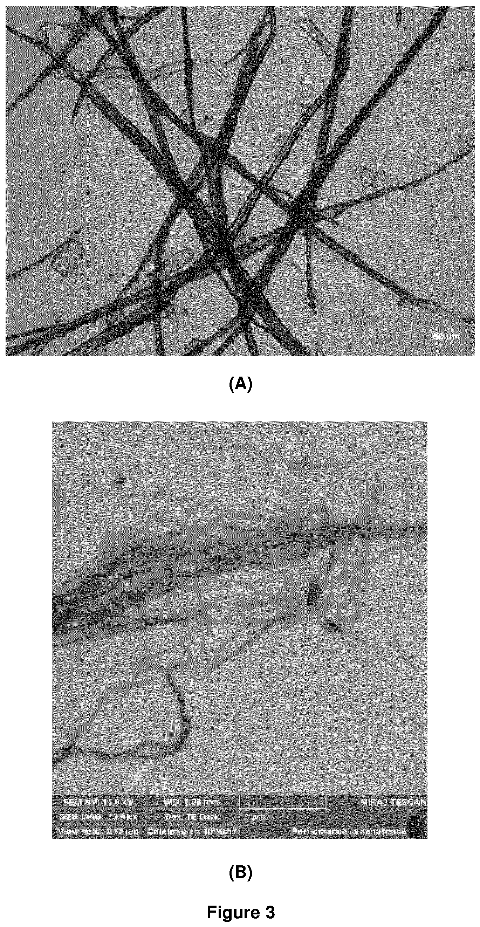

Initially, the characterization of the short brown fibers was performed by optical and electron microscopy, obtaining a larger representative range with diameter varying from 0 to 568 nanometers in the electron microscopy for the MFC of this fiber (figure 2). Electron microscopy imaging was necessary to define the real size of MFC from the fiber. The images at 200 times and 23,900 times of magnitude for optical and electronic microscopy, respectively, give an idea of the sizes of the fibers and MFC in a projection (figure 3).

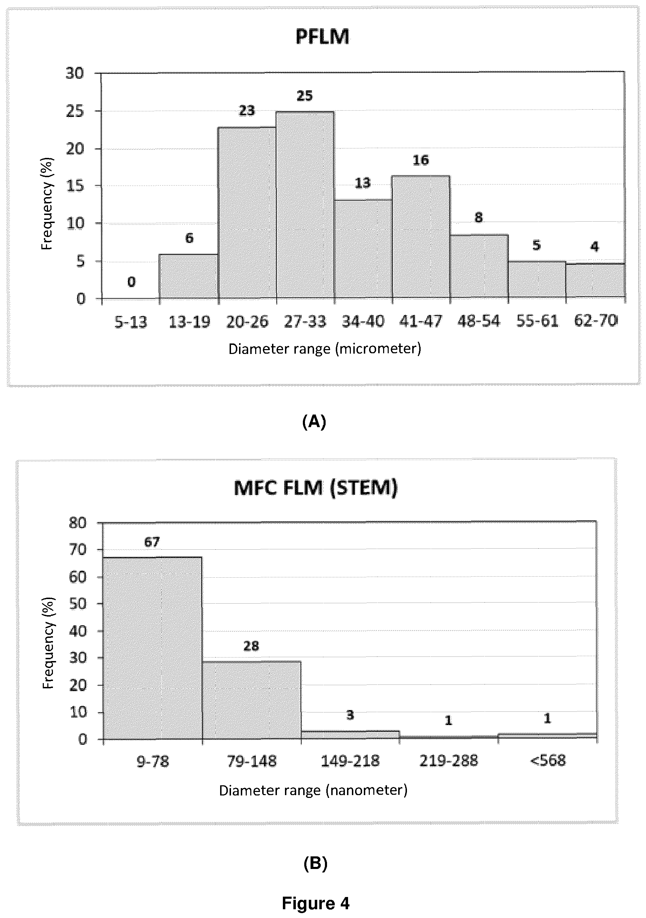

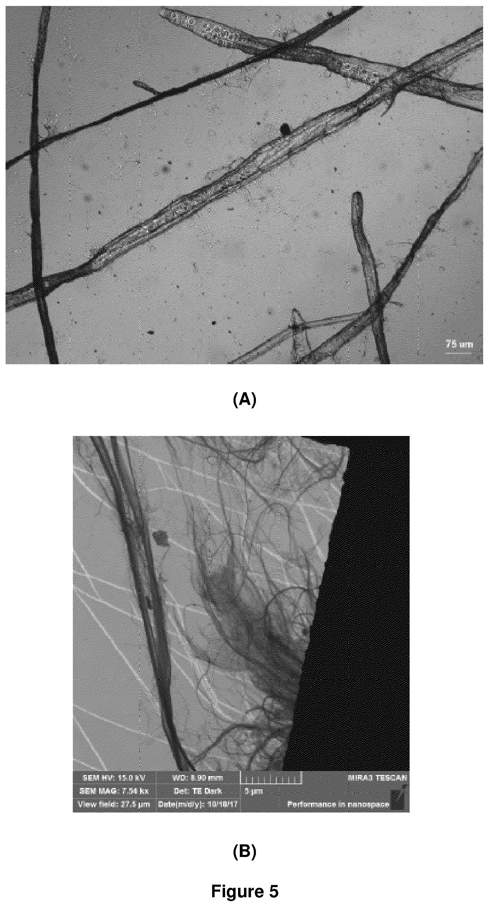

Then, the characterization of the brown long fibers was carried out again, both by optical and electronic microscopy. A larger representative range with a diameter varying from 9 to 568 nanometers was obtained for MFC through electron microscopy (figure 4). Electron microscopy imaging was necessary to define the real size of MFC from the e fiber. The images at 100 times and 7,400 times of magnitude for optical and electronic microscopy, respectively, give an idea of the sizes of the fibers and MFC in a projection (figure 5).

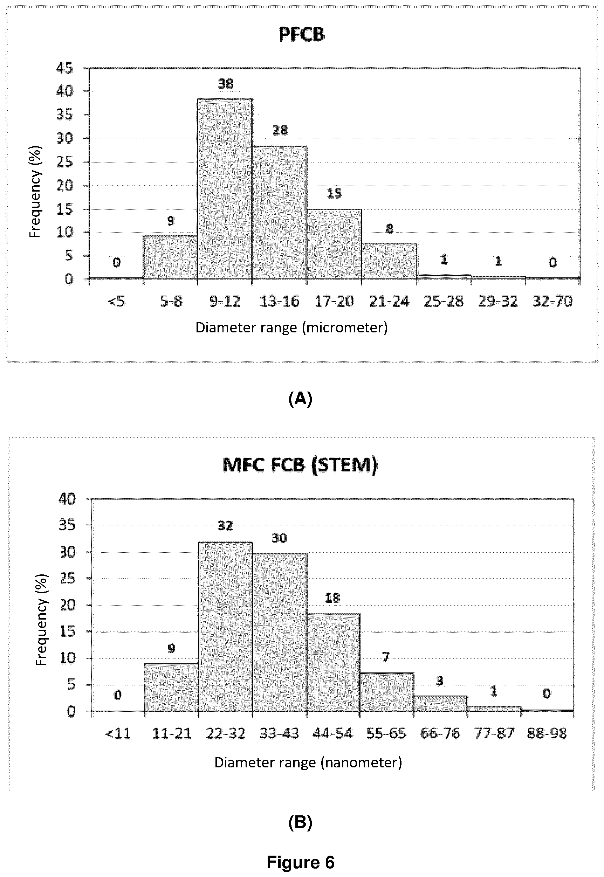

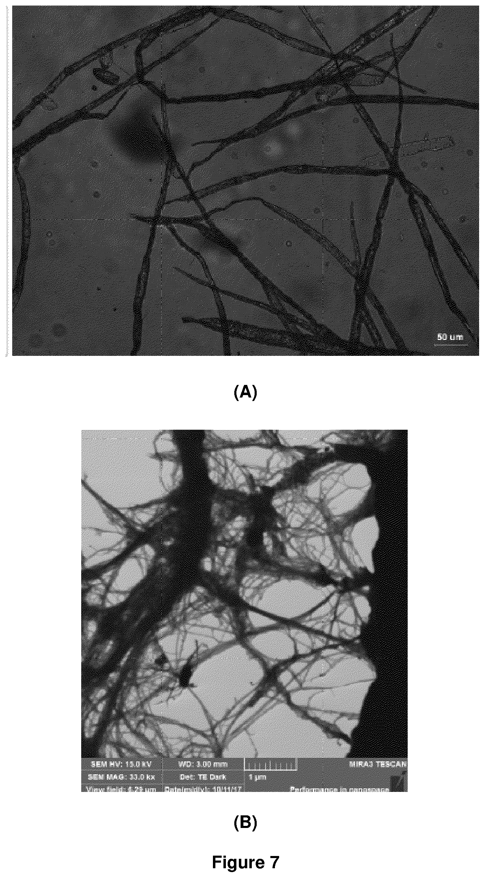

Finally, the characterization of the bleached short fibers was performed, again both by optical and electronic microscopy. A larger representative range with a diameter varying from 11 to 98 nanometers was obtained for MFC through electron microscopy (although other ranges, such as 33-43, are also significant) (figure 6). Electron microscopy imaging was necessary to define the real size of MFC from the fiber. The images at 200 times and 33,000 times of magnitude for optical and electronic microscopy, respectively, give an idea of the sizes of the fibers and MFC in a projection (figure 7).

Thus, MFCs of brown and bleached short fibers, as well as of brown long fibers, were considered to have a satisfactory size for the production of paper with improved characteristics.

The zeta potential of MFCs produced was also measured. Zeta potential is a stability parameter, since the residual charge on the surface can repel one form the others and destabilize the medium containing them. The different size of the microfibrils can result in interlacing, which influences the value difference. Additionally, the presence of residual hemicelluloses may also change the reading of this parameter due to its agglutination capability. The values found are in agreement with the zeta potential of microfibrils (potentials between -56.96 and -26.86 mV).

**Table 3** - Values obtained from zeta potential analysis:

| Sample | Value 1 | Value 2 | Mean (mV) | Std. Deviation |
|---|---|---|---|---|
| Brown short fiber MFC | -37.6 | -36.8 | -37.2 | 0.57 |
| brown long fiber MFC | -33.7 | -40.3 | -37.1 | 4.67 |
| White short fiber MFC | -33.1 | -32.8 | -33.0 | 0.21 |
| Deionized Water | -19.3 | -19.3 | -19.3 | 0.00 |

Application of MFC to pulp for producing kraft paper

Kraft paper or kraftliner paper is a type of paper made with a mixture of short and long cellulose fibers or not, from wood kraft pulps.

The use of microfibrillated cellulose as a strength additive was evaluated in the production of kraft paper in the paper machine 4 (MP4). Between 1.0 and 1.5% of MFC were dosed in the mixing tank together with 5.0 kg/t of cationic starch. There was no need to reduce the machine speed, there were no production breaks due to difficulties encountered due to drainage, the paper retention level remained high and, additionally, paper formation remained good without the need for additional adjustment to the machine.

It is possible to observe that the MFC addition causes the modification of the physical paper structure, which impacts on the phenomena of water drainage and movement during its formation. This increase is expected, since the number and frequency of bonding is increased due to the high specific surface of MFC, which promotes a great interaction at the interface with the fibers surface that form the paper. Therefore, the largest number of bonds and interactions of MFC with the surface of the fibers constituting the paper structure justifies the production of papers with improved physical and mechanical properties.

These physical and mechanical properties were measured through comparisons of tests common to paper production and cellulose industry in general. Measurements such as the *Schopper Riegler* degree or °SR, tensile strength (strength until paper breakage), stretching (another strength measure until the paper breakage), bursting or burst resistance (strength to the beginning of paper breakage), tear resistance (strength required to keep paper breakage until complete separation), *Tensile Energy Absorption* (TEA) (another strength measurement of total paper breakage), *Short Crush Test* (SCT) (compressive strength), *Ring Crush Test* (RCT) (another measurement of compressive strength), *Scott (Ply) Bond* (resistance to delamination or loss of layers), *Gurley* (resistance to airflow which indicates the behavior of paper macro and microporosity), *Water Retention Value* (WRV) (measurement of the amount of water retained in the paper), *Drainage Freeness Retention* (DFR) (draining time) and *Modulus of Elasticity* (MOE) (measurement of the material stiffness). It shall be noted that some tests are measured as indexes, which is the quotient of the strength analyzed by the paper weight.

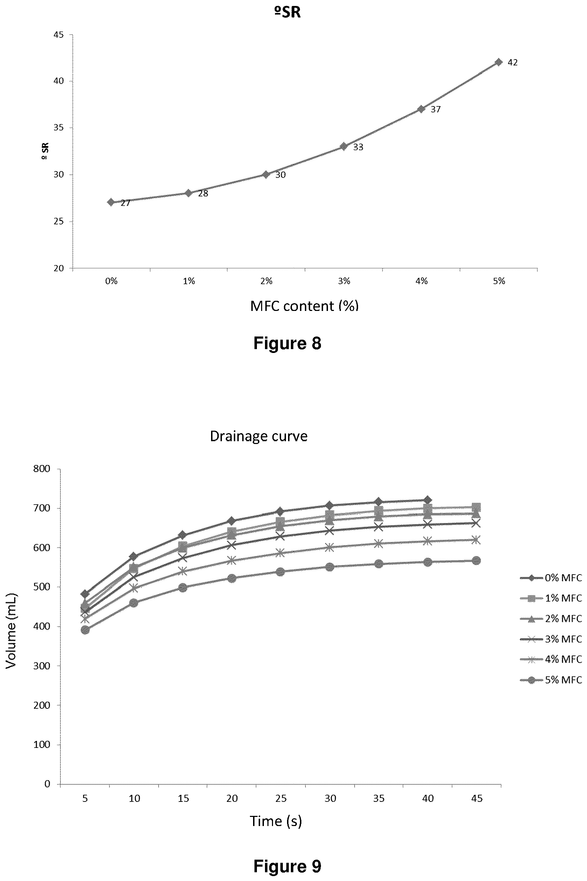

When adding MFC up to 1.5% by mass in the cellulosic pulp, the °SR of the pulp can increase up to 3 points (figure 8), while for the drainage curve, it is possible to observe the reduction of up to 100 ml or more of water drained in the first 10 seconds of paper formation (figure 9).

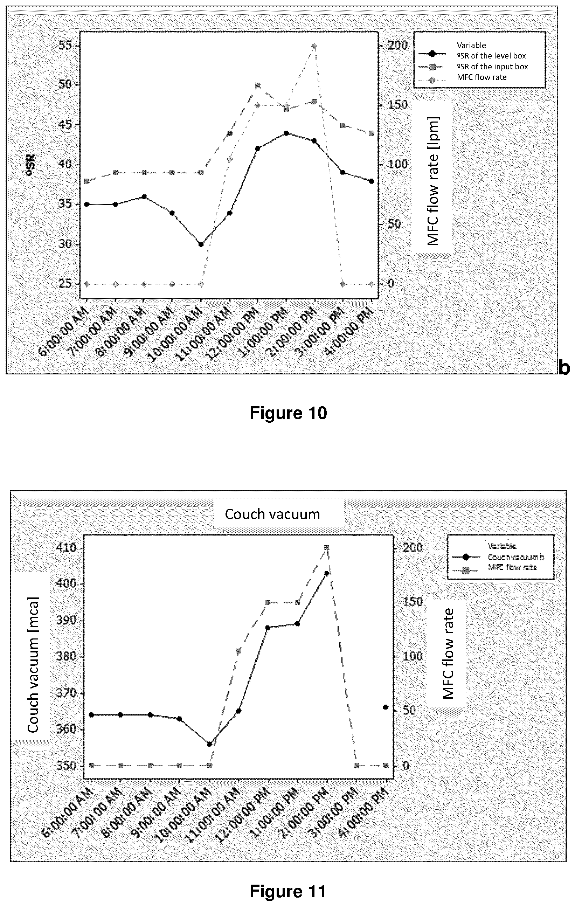

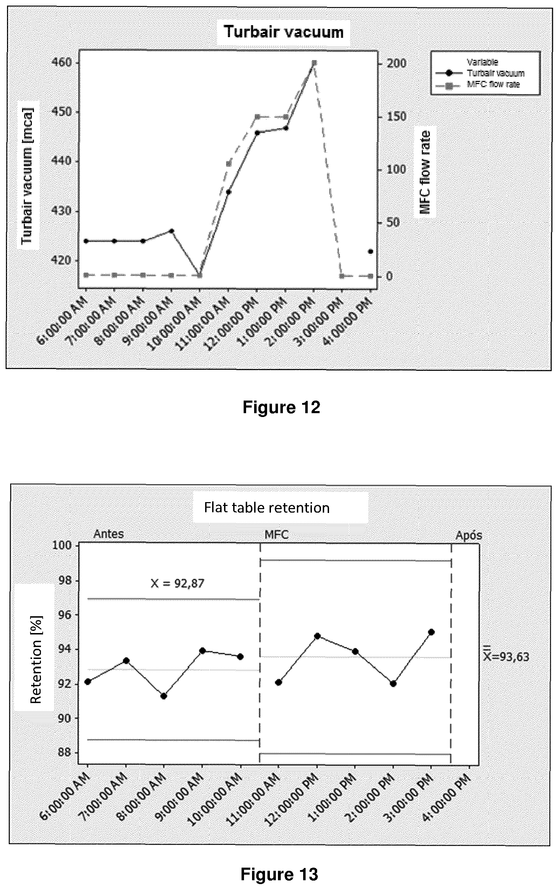

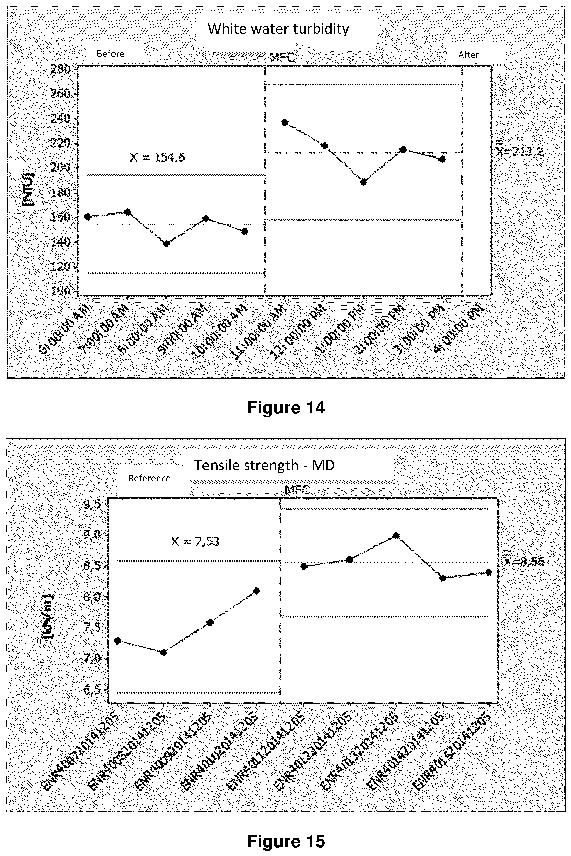

The drain resistance of the pulp from the level box and in the input box was considerably affected by the dosage of 1.0 to 1.5% of MFC, increasing by approximately 20% the °SR (figure 10). The vacuum in the *Couch* (roll of the wet section of the machine with its own vacuum system) and *Turbair* (vacuum system integrated into the machine) increased by about 10% (figures 11 and 12), while the flat table retention (water mirror advance) remained high during all production, above 93% and practically constant, despite the increase in the amount of MFC (figure 13). These values were indicative of the greater drainage difficulty at the table. However, it was not necessary to slow down the machine to produce satisfactory results on the final paper. The turbidity of white water (figure 14) increased about 40%, which is indicative of the loss of cellulosic fibers or even MFC to water. However, this value can be explained by the high fiber concentration in the pulp.

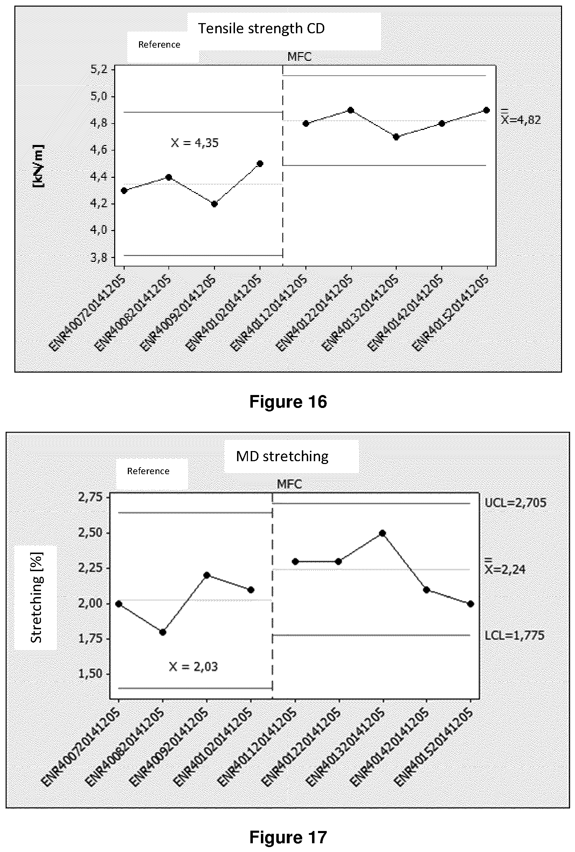

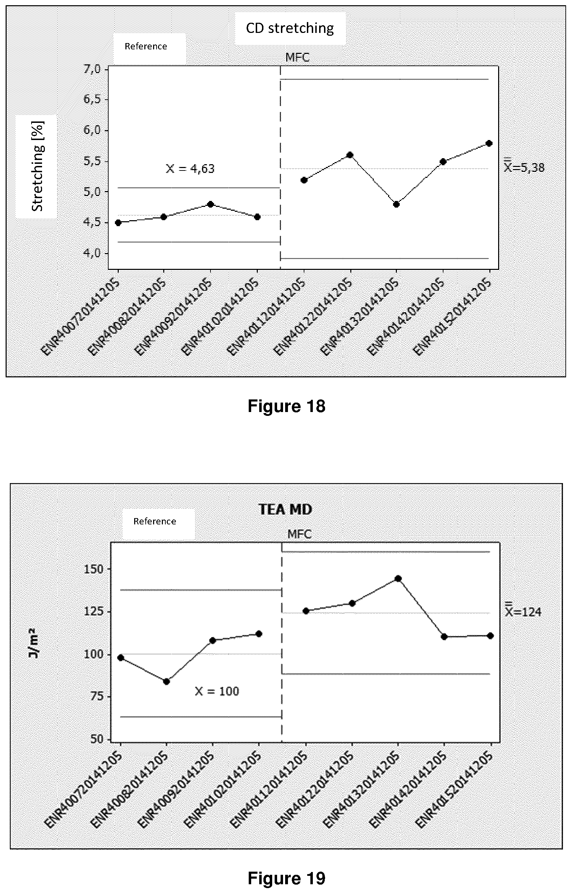

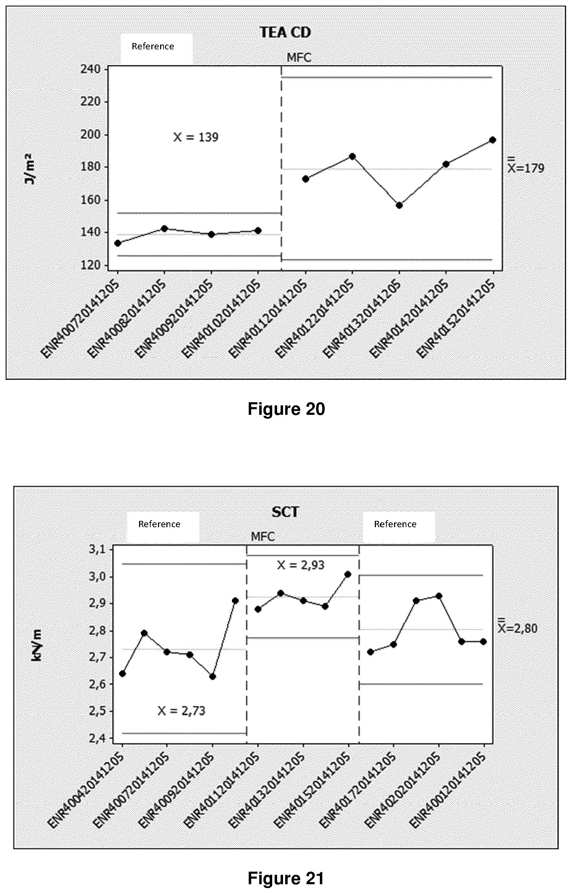

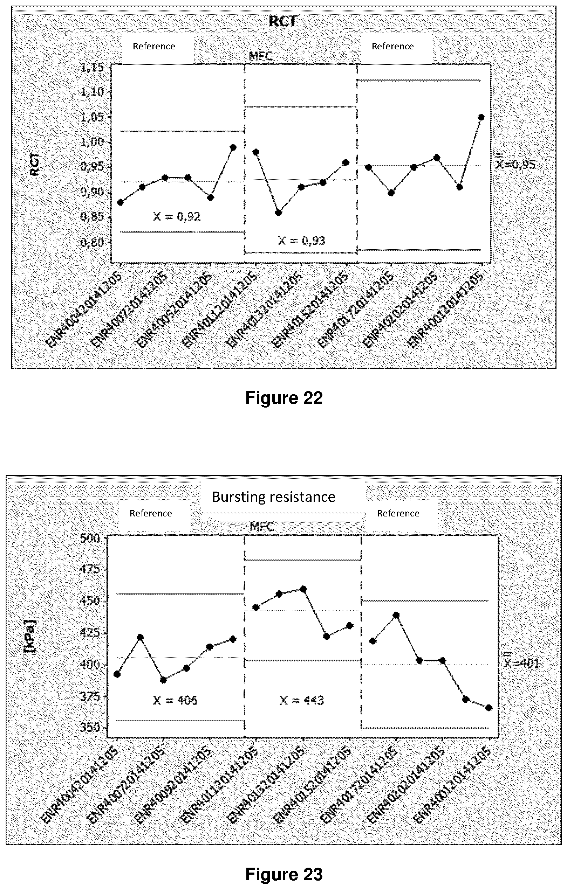

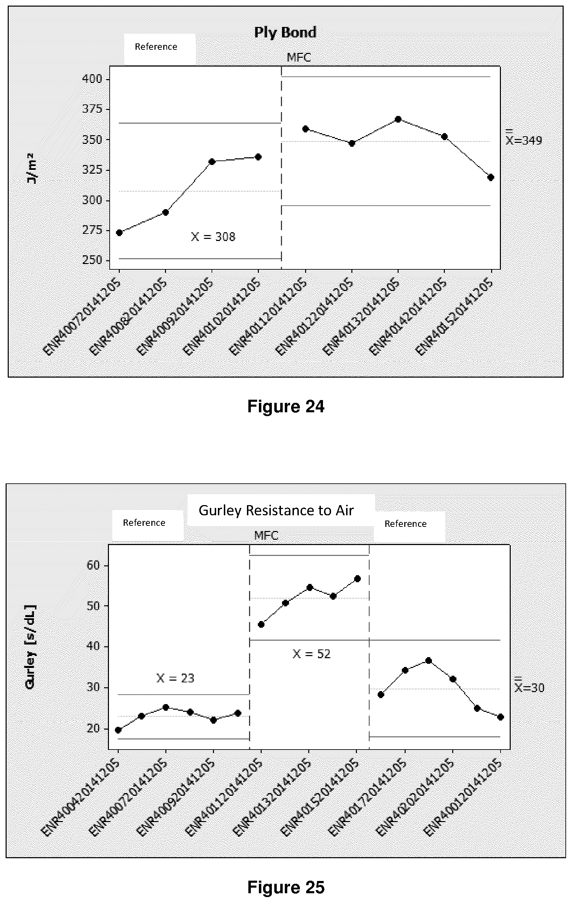

The tensile strength, stretching and TEA were calculated as the geometric mean of the tensile measurement in the MD (*Machine Direction,* or direction of the papermaking machine) and CD (*Cross Direction,* or direction opposite to the paper machine), in order to evaluate physical and mechanical characteristics without the effect of paper orientation. There was an average 12% increase in tensile strength when compared to the reference paper (figures 15 and 16). There was an increase in elongation (figures 17 and 18) and in TEA MD and CD in 24 and 29%, respectively (figures 19 and 20). The SCT of paper with MFC had a small increase of 7% (figure 21), whereas the RCT had practically no gain (figure 22). Bursting resistance increased by about 10% on paper with MFC (figure 23), while *Scott* (*Ply*) *Bond* increased by about 13% (figure 24). There is a notable change in the physical paper structure observed by the resistance to airflow (*Gurley*), which doubled with the addition of 1.0% MFC (figure 25).

Generally, the addition of MFC tends to increase paper density, which occurs due to the construction of a strong fibrous network, as a result of the high binding capacity of the MFC fibers, thus occurring a steady increase of paper strength properties, as can be observed in the results obtained.

The increased strength verified indicates benefits in the use of paper for converting into packaging, either by increasing the strength of the packaging or by the possibility of reducing the paper grammage. In addition, the considerable increase in the elastic properties discloses the potential use of MFC in the outer layers of the paperboard, which can increase its flexural strength and, subsequently, reduce its grammage.

Application of MFC to pulp for producing sackraft paper

MFC was applied on sackraft paper for improving tear strength and/or weight reduction. Sackraft paper is a porous kraft paper with greater elasticity and strength.

Increase of tear strength of sackraft paper by using MFC in cellulosic pulp

Application of MFC compensates the reduction of the degree of refinement, and produces papers with better mechanical properties.

Moreover, the application of MFC allows the reduction of up to 10 $g/m^2$ in sackraft papers. The entire structure of the paper is modified when MFC is applied, and then, it is possible to produce papers with different macro and microporosities, which allows the classification of these papers as new raw material for the application of barriers that already presents MFC as a renewable primer incorporated into its structure.

Thus, modification of paper porosity leaves room for the development of both different and differentiated products, since their structure can be completely modified. Examples of papers of the present invention, which may be also used together with the MFC for obtaining improved mechanical characteristics, but not limited to them, are testliner and corrugated papers.

It is known that the tear index tends to decrease with refining. Thus, lower refining levels tend to further preserve the fiber wall structure. A lower refining intensity demonstrates an improvement in the tear index. On the other hand, little refining does not develop other properties equally important, such as tensile and bursting. In order to maintain these other properties, MFC was applied to pulps with intermediate refinement levels. As an example, the tensile index of the standard pulp (°SR 18) can be achieved with a pulp refined to °SR 14 + 4% of MFC.

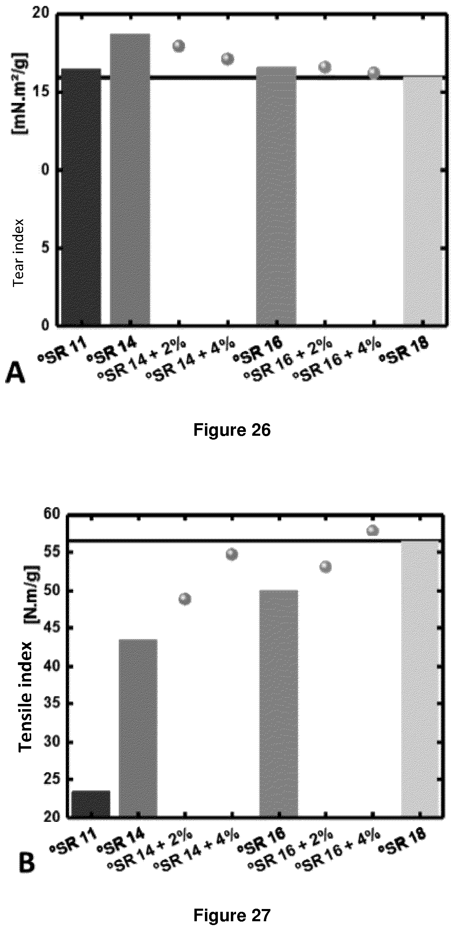

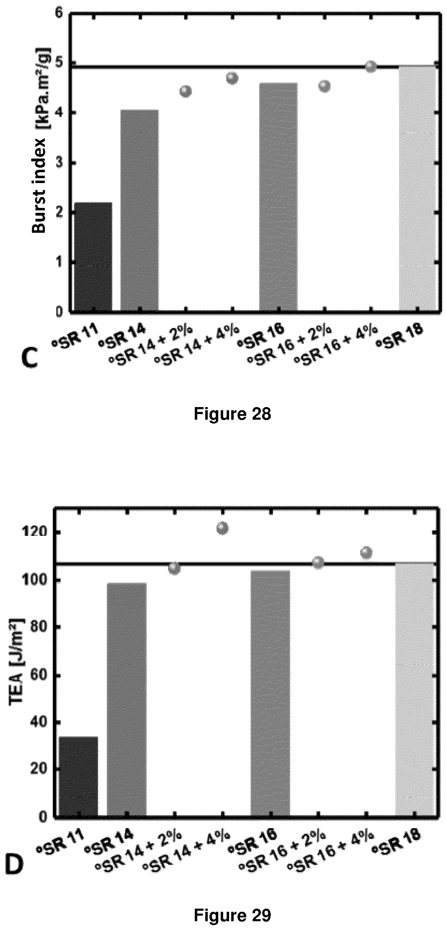

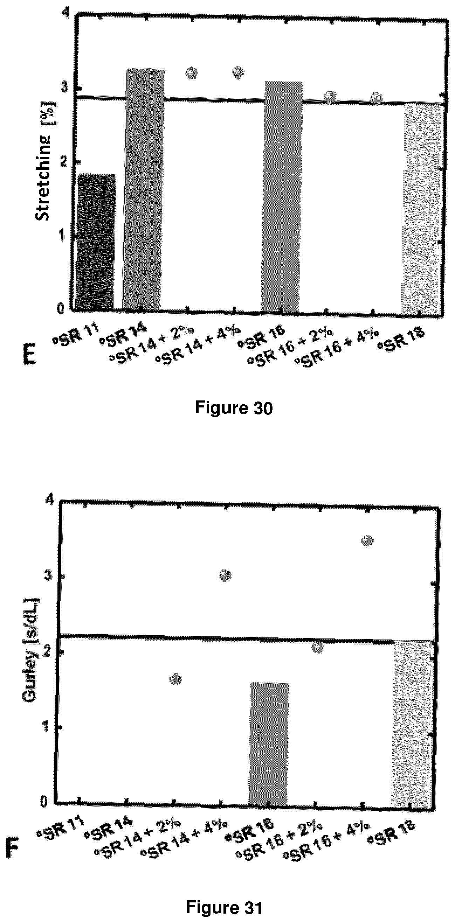

Under these conditions, the tear index rose by 8% (figure 26), while tensile and burst indexes were maintained (figures 27 and 28). Finally, TEA was raised by about 20% (figure 29), the elongation increased by 15% (figure 30) and the *Gurley* was raised by 37% (figure 31).

The results showed that, in this case, the application of MFC as internal bonding agent compensates the need for refining, and less refining energy is required.

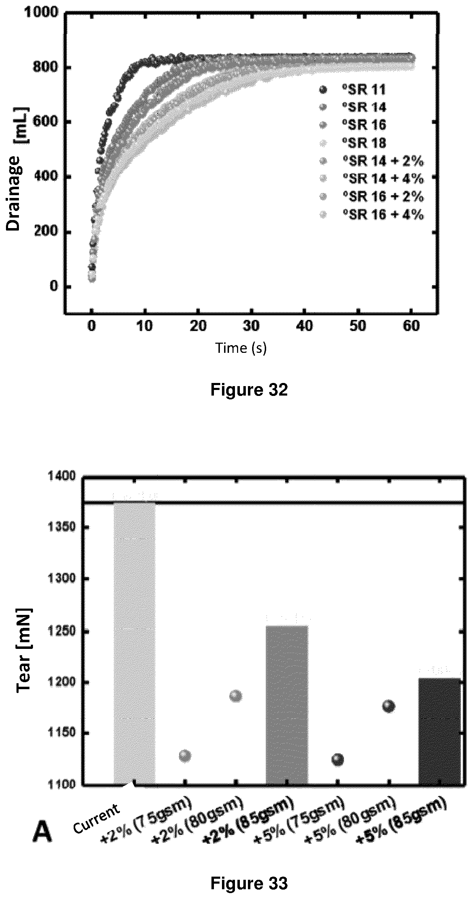

Additionally, MFC is known as a highly hygroscopic material, which can have effects on the paper drainage process. It can be verified that due to the lower °SR of the intermediate refinements, the application of MFC did not result in drainage loss (figure 32). In fact, in some samples, drainage has proved to be even better than the standard paper, which can bring savings in the paper production process.

Reduction of the sackraft paper grammage by using MFC in cellulosic pulp

Oppositely from the previous scenario, this scenario is aimed at reducing grammage as the focus for approving the use of MFC. Thus, two levels of MFC (2 and 5%) were tested, and the grammages were reduced in steps of 5 $g/m^2$.

It is to be noted that the differentiating factor of this invention is the use of MFC and the consequences derived from this use. At first, the paper grammage is fixed and different concentrations of MFC are added, aiming at changes of grammage, among other factors. The search in grammage reduction is derived from the study of different concentrations of MFC to cellulose pulp.

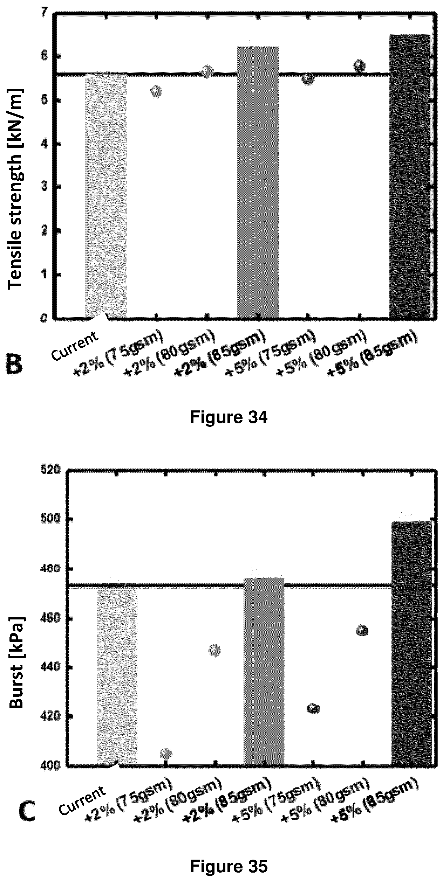

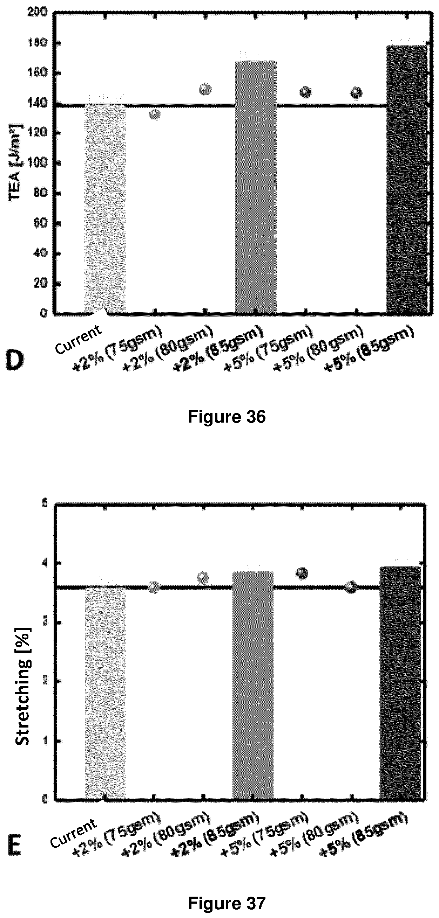

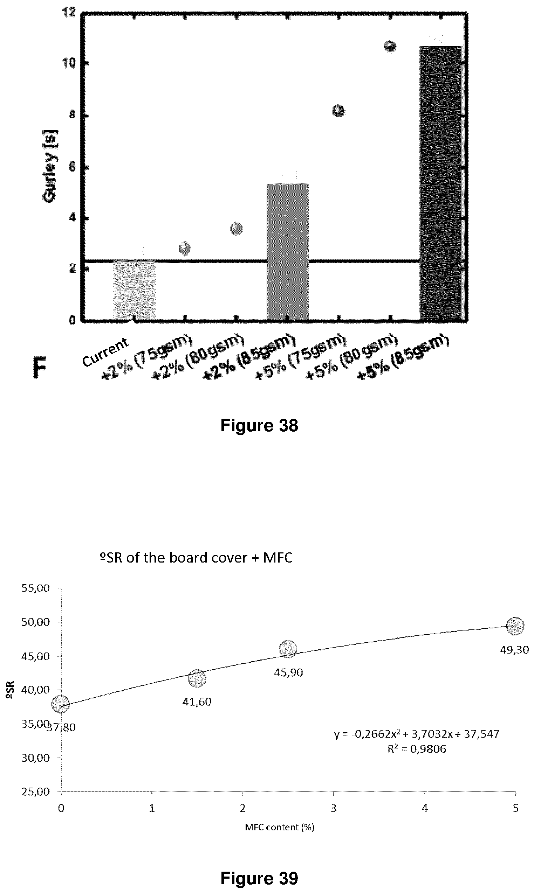

As expected, the use of MFC in the same matrix pulp tends to negatively influence the tear properties due to the greater paper thickening (figure 33). On the other hand, MFC, considering only the current grammage of 85 $g/m^2$, raises tensile (figure 34), bursting (figure 35), TEA (figure 36) and stretching 37) properties. It is interesting to note that the application of MFC compensates grammage in all mechanical properties. As an example, the reduction of 10 g/m$^2$ (85 to 75 g/m$^2$), by applying 2% of MFC demonstrates that the specifications of the current product are maintained. Thus, both the wood production chain and the industrial transformation benefit from the less use of raw materials. Finally, the *Gurley* property had an increase of about 400% (figure 38), which justifies the use of MFC as a renewable primer on sackraft paper.

Application of MFC to pulp for producing paperboard

The use of MFC in cellulosic pulp for in the manufacture of paperboard can occur in different layers of that paper, since having a cover layer and a base layer is an intrinsic feature of the paperboard, which are bonded by a middle layer. Each of these layers may be manufactured with several inner layers with smaller grammage, but the intent of the MFC evaluation in the present invention relates only to the 3 major layers.

Use of MFC to manufacture the paperboard cover layer

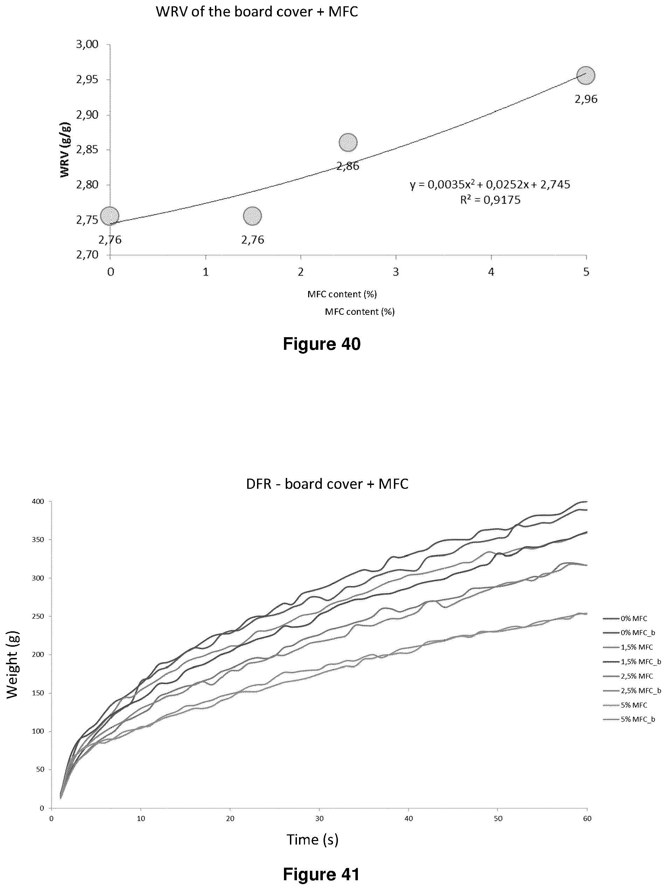

This section shows the behavior of the addition of MFC in the cellulosic pulp of the paperboard cover layer. It is possible to notice the increase of °SR and of the water retention value (WRV) with the increase of the MFC content used in the pulp (figures 39 and 40). The increase in °SR indicates a greater difficulty in the water physical drainage, while the WRV increase indicates a higher interaction of water with the cellulosic fibers (high specific surface area), which is evidenced by the change in the drainage behavior (DFR) (figure 41).

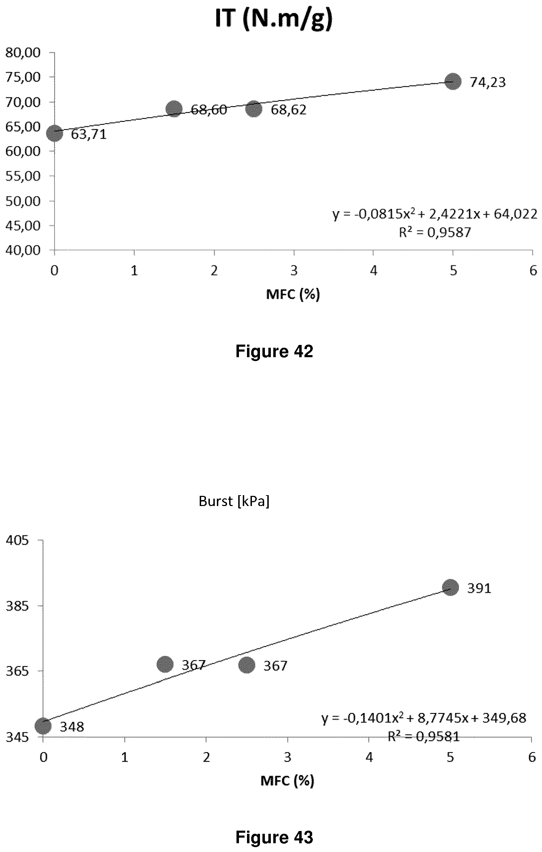

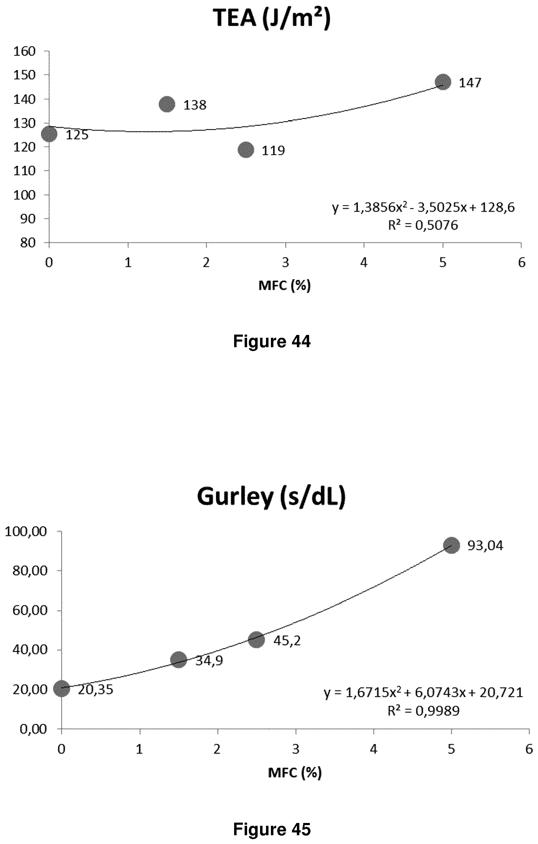

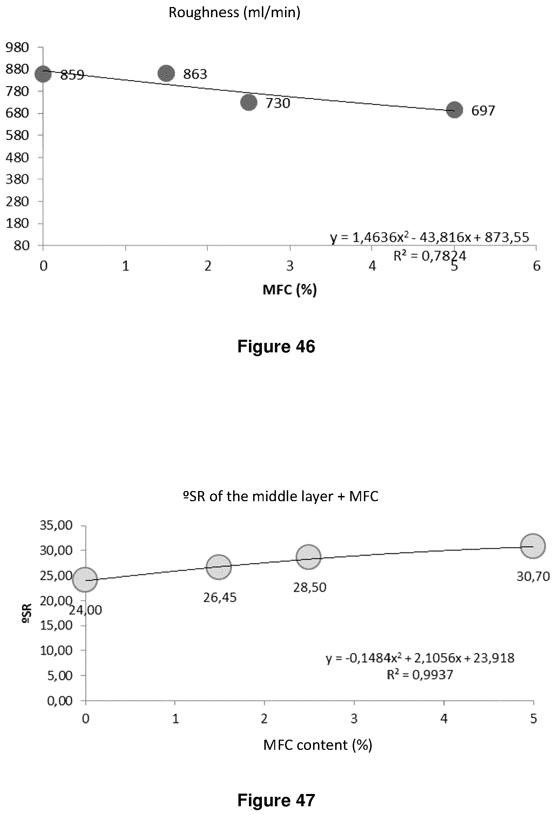

The physical and mechanical strength of the paperboard cover layer produced with the addition of MFC to the pulp were also studied. Properties such as the tensile index (IT), bursting and TEA show a growing trend to increase, which demonstrates the production of a more resistant cover layer (figures 42, 43 and 44). The reduction of roughness (figure 46) can be explained by the modification of the macro and micro porosities of the paper, indicated by the increase in resistance to airflow (*Gurley*) (figure 45).

Use of MFC to manufacture the paperboard middle layer

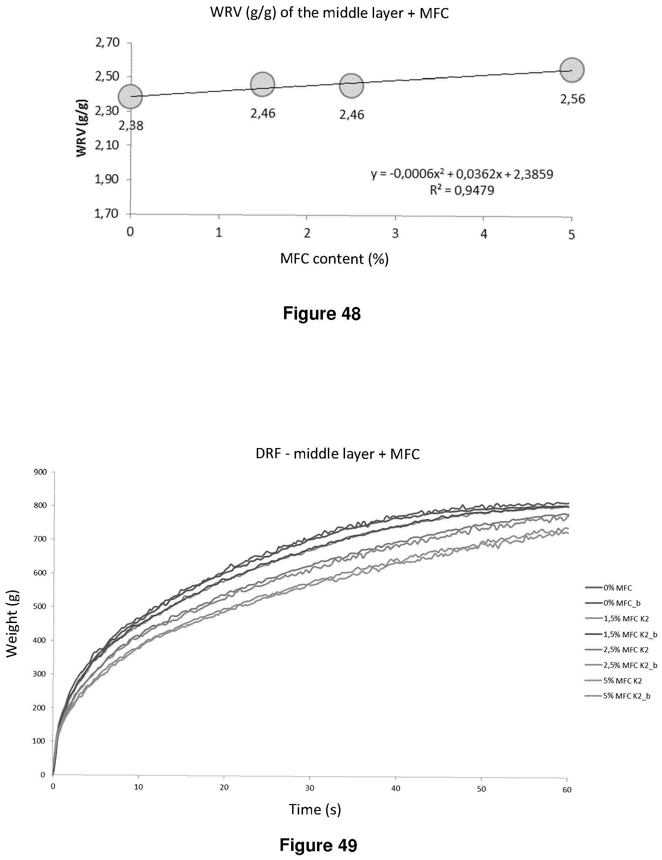

Just like the cover layer study, the increase of °SR in the middle layer (figure 47) indicates greater difficulty in the water physical drainage, while the increase in WRV (figure 48) shows that the addition of MFC also promotes, due to its greater specific surface, a higher frequency of interactions with water, which is also indicated by the modified drainage behavior (figure 49). However, it is possible to observe that, due to the composition of the paperboard middle layer, there is a smaller increment of properties related to drainage and physical-chemical interaction with water, when compared to the cover layer, which demonstrates that the fibrous composition influences the bonding mechanisms and formation of the fibrous network at the fiber-MFC-fiber interface.

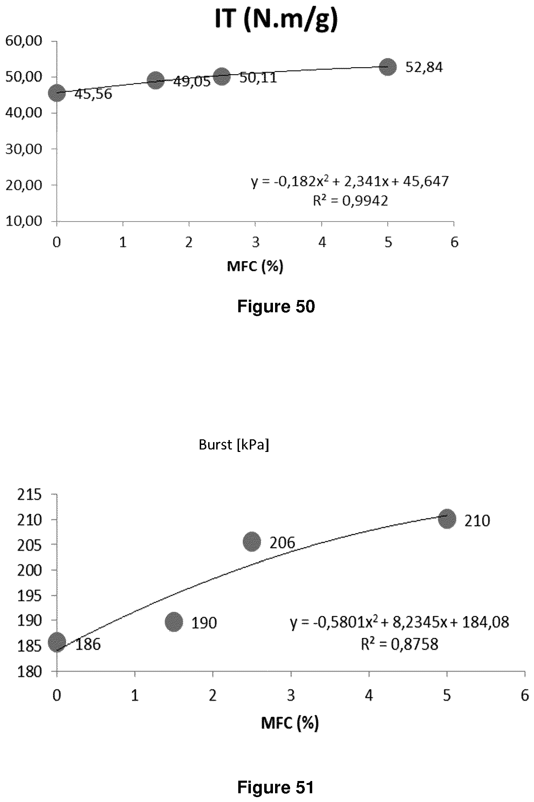

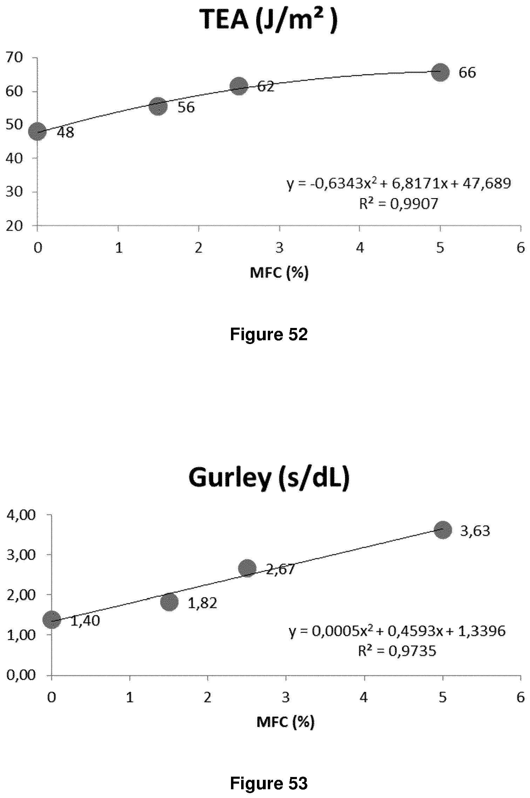

The paperboard middle layer is generally the bonding layer between the surface and the base of the paperboard. By adding MFC to its fibrous composition, an increase in the physical and mechanical strength properties (figures 50, 51, 52 and 53) was observed in tests with the cover layer.

Use of MFC to manufacture the paperboard base layer

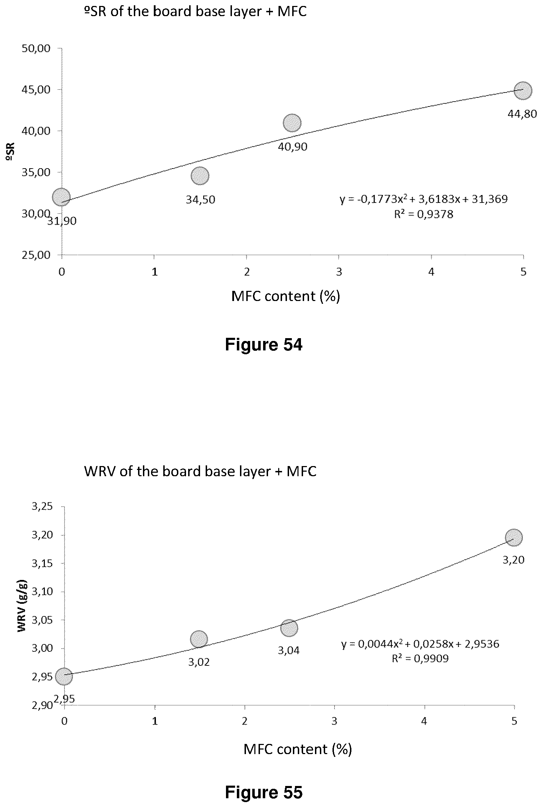

The board base layer shows the same effects previously observed with the cover and middle layers. As MFC is added to cellulosic pulp, the increase of °SR occurs, indicating greater difficulty in the physical drainage of water, which is also indicated by the altered drainage behavior (figures 54, 55 and 56).

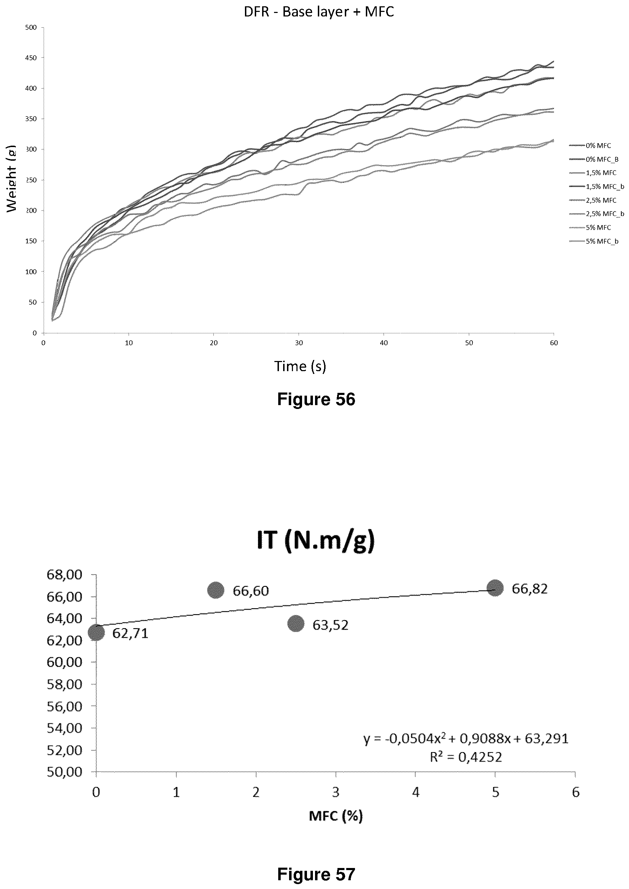

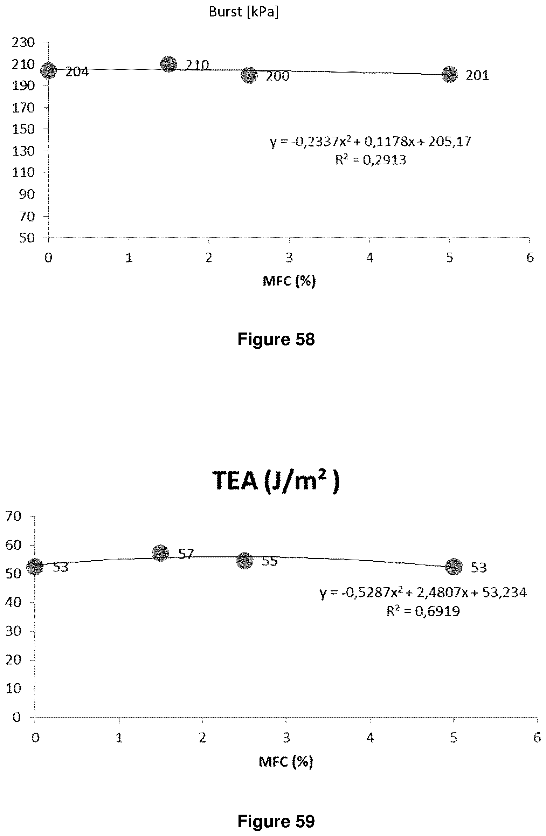

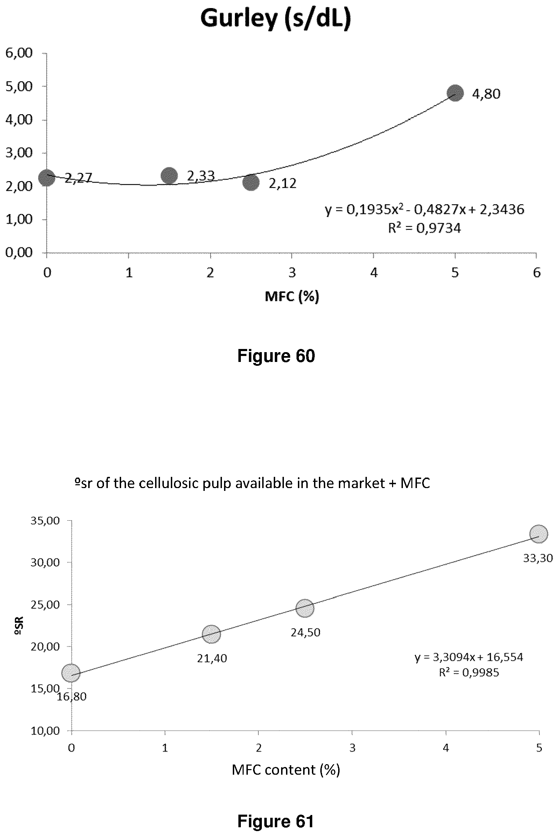

However, regarding the physical and mechanical strength properties, only the tensile (IT) and *Gurley* indexes increased (figures 57 and 60), unlike the cover and medium layers. The burst index and TEA properties remained close to the initial values (figures 58 and 59), indicating lower anchorage of the MFC to the pulp cellulosic fiber.

Application of MFC to cellulosic pulp available in the market

This application corresponds to the addition of MFC to the cellulosic pulp commercially available, a viable alternative for paper producers who already have a stock of cellulosic pulp and plan to produce paper with improved characteristics.

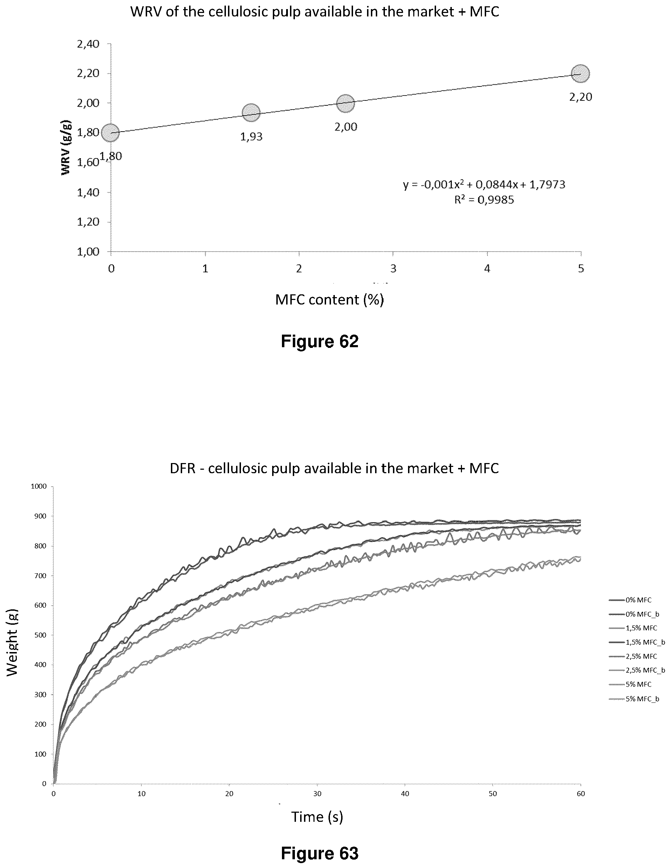

Thus, the tests carried out so far were made directly on the cellulosic pulp. It is possible to observe the increase of the °SR value with the addition of MFC (figure 61) due to the modification of the drainage structure of the blanket formed by the fibers + MFC composition. The same behavior occurs with the WRV property (figure 62), which demonstrates a slight increase of the values according to the graph and indicates that the increase of the MFC content in the cellulosic pulp may potentiate the physical-chemical interactions with the water present in the medium, a phenomena which can be also observed in the drainage curves obtained (Figure 63).

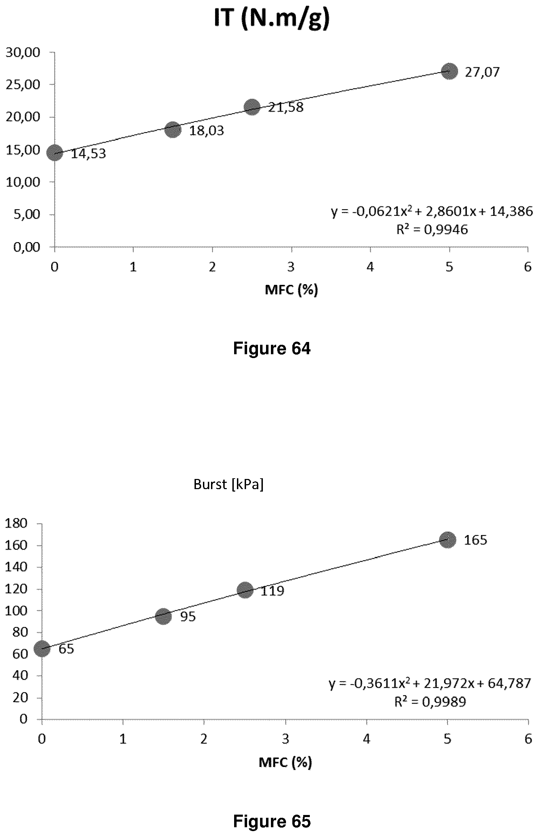

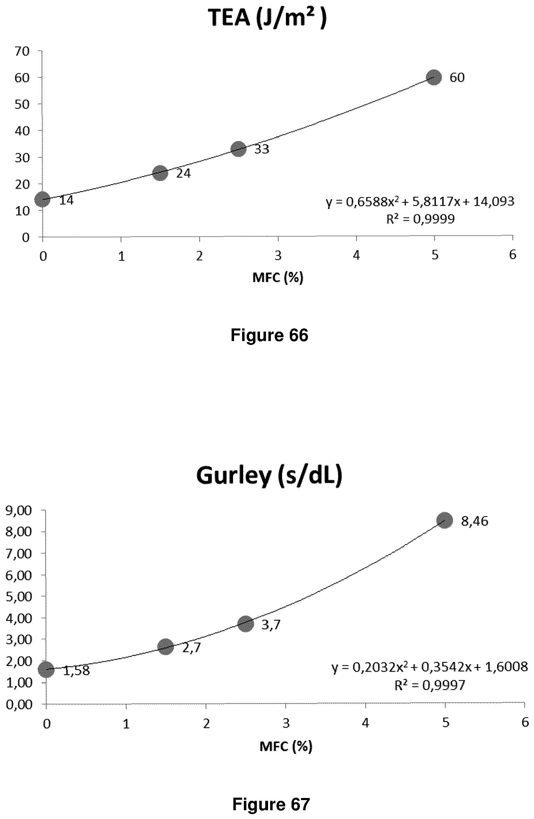

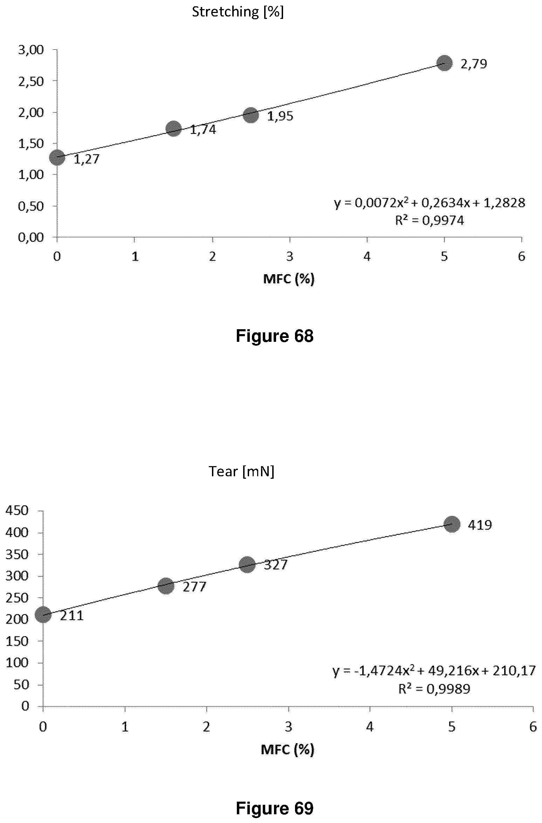

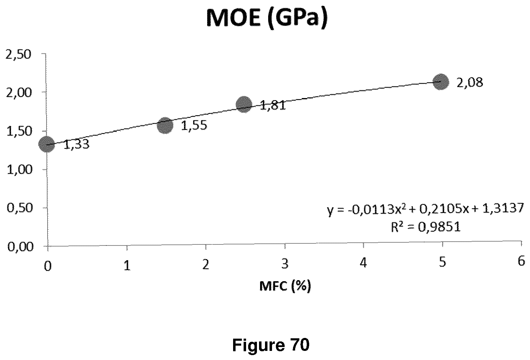

The strength properties of the cellulosic pulp with the addition of MFC were also evaluated. It is worth noting that when MFC was added in the bleached short fiber cellulosic pulp, it was possible to observe gains in mechanical strength higher than 50%, as in the burst index (figure 65) and TEA (figure 66)), while other mechanical strength tests, such as stretching (figure 68), tear index (figure 69) and *Modulus of Elasticity* (MOE) (figure 70) showed growth very close to 50%. However, *Gurley* (figure 67), also increased, as expected.

The impact on adding a biopolymer, such as MFC, in the composition of the cellulose pulp available in the market could positively influence the properties of the final product on the customer end. Thus, when using the market cellulose pulp containing CFM, it will be possible to reduce the energy input needed to refine the pulp, and to produce a final product with unique mechanical strength properties.

**Claims**

1.  Paper containing cellulosic fibers **characterized by** comprising between 1.0 to 1.5% by weight of microfibrillated cellulose and a grammage ranging from 60 to 440 g/m$^2$.

2.  Paper, according to claim 1, **characterized in that** the microfibrillated cellulose has an average diameter of less than 1,000 nanometers.

3.  Paper, according to claims 1 and 2, **characterized in that** the microfibrillated cellulose has an average diameter preferably between 1 and 568 nanometers.

4.  Paper, according to claim 1, **characterized in that** it is kraft, sackraft or paperboard.

5.  Kraft, sackraft or paperboard paper containing cellulosic fibers, **characterized by** comprising between 1.0 and 1.5% by weight of microfibrillated cellulose with an average diameter between 1 and 568 nanometers, and a grammage between 60 and 440 g/m$^2$.

6.  Papermaking process **characterized in that** it comprises adding 1.0 to 1.5% by weight of microfibrillated cellulose to a cellulosic pulp.

7.  Process, according to claim 6, **characterized in that** the cellulosic pulp is brown, bleached or mechanical.

8.  Process, according to claims 6 and 7, **characterized in that** 1.0 to 1.5% by weight of brown short microfibrillated cellulose is added to a brown cellulosic pulp for the production of kraft paper.

9.  Process, according to claims 6 and 7, **characterized in that** 1.0 to 1.5% by weight of brown long microfibrillated cellulose is added to a brown cellulosic pulp for the production of sackraft paper.

10. Process, according to claims 6 and 7, **characterized in that** 1.0 to 1.5% by weight of bleached short microfibrillated cellulose is added to a bleached cellulosic pulp for the production of the cover layer of a paperboard.

11. Process, according to claims 6 and 7, **characterized in that** 1.0 to 1.5% by weight of non-bleached short microfibrillated cellulose is added to a mechanic cellulosic pulp and kraft for the production of the middle and base layers of a paperboard.

12. Cellulosic pulp **characterized in that** it comprises from 1.0 to 1.5% by weight of microfibrillated cellulose with a diameter between 1 and 568 nanometers.

13. Pulp, according to claim 12, **characterized in that** it is of brown, bleached or mechanical type.

Case A - Medium without application of microfibrillated cellulose (MFC) in pulp

Case B - Medium with application of microfibrillated cellulose (MFC) in pulp

**Figure 1**

(A)

(B)

Figure 2

(A)

(B)

Figure 3

**(A)**

**(B)**

**Figure 4**

(A)

(B)

Figure 5

(A)

(B)

Figure 6

(A)

(B)

Figure 7

ºSR

Figure 8

Drainage curve

Figure 9

Figure 10

Figure 11

Figure 12

Figure 13

**Figure 14**

**Figure 15**

Figure 16

Figure 17

Figure 18

Figure 19

Figure 20

Figure 21

Figure 22

Figure 23

Figure 24

Figure 25

**Figure 26**

**Figure 27**

Figure 28

Figure 29

**Figure 30**

**Figure 31**

Figure 32

Figure 33

**B**

**Figure 34**

**C**

**Figure 35**

Figure 36

Figure 37

**Figure 38**

ºSR of the board cover + MFC

$y = -0{,}2662x^2 + 3{,}7032x + 37{,}547$
$R^2 = 0{,}9806$

**Figure 39**

WRV of the board cover + MFC

$y = 0{,}0035x^2 + 0{,}0252x + 2{,}745$
$R^2 = 0{,}9175$

MFC content (%)

MFC content (%)

**Figure 40**

DFR - board cover + MFC

Time (s)

**Figure 41**

## IT (N.m/g)

$y = -0,0815x^2 + 2,4221x + 64,022$
$R^2 = 0,9587$

**Figure 42**

## Burst [kPa]

$y = -0,1401x^2 + 8,7745x + 349,68$
$R^2 = 0,9581$

**Figure 43**

## TEA (J/m²)

$$y = 1{,}3856x^2 - 3{,}5025x + 128{,}6$$
$$R^2 = 0{,}5076$$

Figure 44

## Gurley (s/dL)

$$y = 1{,}6715x^2 + 6{,}0743x + 20{,}721$$
$$R^2 = 0{,}9989$$

Figure 45

Roughness (ml/min)

$y = 1{,}4636x^2 - 43{,}816x + 873{,}55$
$R^2 = 0{,}7824$

MFC (%)

**Figure 46**

ºSR of the middle layer + MFC

$y = -0{,}1484x^2 + 2{,}1056x + 23{,}918$
$R^2 = 0{,}9937$

MFC content (%)

**Figure 47**

WRV (g/g) of the middle layer + MFC

$y = -0,0006x^2 + 0,0362x + 2,3859$
$R^2 = 0,9479$

**Figure 48**

DRF - middle layer + MFC

Legend:
- 0% MFC
- 0% MFC_b
- 1,5% MFC K2
- 1,5% MFC K2_b
- 2,5% MFC K2
- 2,5% MFC K2_b
- 5% MFC K2
- 5% MFC K2_b

**Figure 49**

## IT (N.m/g)

$$y = -0,182x^2 + 2,341x + 45,647$$
$$R^2 = 0,9942$$

MFC (%)

Figure 50

Burst [kPa]

$$y = -0,5801x^2 + 8,2345x + 184,08$$
$$R^2 = 0,8758$$

MFC (%)

Figure 51

## TEA (J/m²)

$$y = -0{,}6343x^2 + 6{,}8171x + 47{,}689$$
$$R^2 = 0{,}9907$$

MFC (%)

**Figure 52**

## Gurley (s/dL)

$$y = 0{,}0005x^2 + 0{,}4593x + 1{,}3396$$
$$R^2 = 0{,}9735$$

MFC (%)

**Figure 53**

ºSR of the board base layer + MFC

$y = -0{,}1773x^2 + 3{,}6183x + 31{,}369$
$R^2 = 0{,}9378$

Figure 54

WRV of the board base layer + MFC

$y = 0{,}0044x^2 + 0{,}0258x + 2{,}9536$
$R^2 = 0{,}9909$

Figure 55

Figure 56

Figure 57

Burst [kPa]

$$y = -0,2337x^2 + 0,1178x + 205,17$$
$$R^2 = 0,2913$$

MFC (%)

**Figure 58**

# TEA (J/m²)

$$y = -0,5287x^2 + 2,4807x + 53,234$$
$$R^2 = 0,6919$$

MFC (%)

**Figure 59**

## Gurley (s/dL)

$y = 0,1935x^2 - 0,4827x + 2,3436$
$R^2 = 0,9734$

MFC (%)

**Figure 60**

ºsr of the cellulosic pulp available in the market + MFC

$y = 3,3094x + 16,554$
$R^2 = 0,9985$

MFC content (%)

**Figure 61**

WRV of the cellulosic pulp available in the market + MFC

$$y = -0,001x^2 + 0,0844x + 1,7973$$
$$R^2 = 0,9985$$

**Figure 62**

DFR - cellulosic pulp available in the market + MFC

Legend:
- 0% MFC
- 0% MFC_b
- 1,5% MFC
- 1,5% MFC_b
- 2,5% MFC
- 2,5% MFC_b
- 5% MFC
- 5% MFC_b

**Figure 63**

## IT (N.m/g)

$y = -0{,}0621x^2 + 2{,}8601x + 14{,}386$

$R^2 = 0{,}9946$

MFC (%)

**Figure 64**

Burst [kPa]

$y = -0{,}3611x^2 + 21{,}972x + 64{,}787$

$R^2 = 0{,}9989$

MFC (%)

**Figure 65**

## TEA (J/m²)

y = 0,6588x² + 5,8117x + 14,093
R² = 0,9999

MFC (%)

Figure 66

## Gurley (s/dL)

y = 0,2032x² + 0,3542x + 1,6008
R² = 0,9997

MFC (%)

Figure 67

Stretching [%]

$$y = 0.0072x^2 + 0.2634x + 1.2828$$
$$R^2 = 0.9974$$

MFC (%)

**Figure 68**

Tear [mN]

$$y = -1.4724x^2 + 49.216x + 210.17$$
$$R^2 = 0.9989$$

MFC (%)

**Figure 69**

**MOE (GPa)**

$y = -0,0113x^2 + 0,2105x + 1,3137$
$R^2 = 0,9851$

1,33    1,55    1,81    2,08

MFC (%)

**Figure 70**

<div style="text-align:center">**INTERNATIONAL SEARCH REPORT**</div>

| International application No. |
| --- |
| PCT/BR2019/050183 |

| A. CLASSIFICATION OF SUBJECT MATTER |
| --- |
| IPC: D21H11/14 (2006.01),  D21H15/02 (2006.01),  B82Y30/00 (2011.01) |
| CPC: D21H5/14, D21H15/02, B82Y30/00 |
| According to International Patent Classification (IPC) or to both national classification and IPC |

| B. FIELDS SEARCHED |
| --- |
| Minimum documentation searched (classification system followed by classification symbols) |
| **D21H; D21F** |

| Documentation searched other than minimum documentation to the extent that such documents are included in the fields searched |
| --- |
| **Base Patentária INPI-BR; Google Scholar** |

| Electronic data base consulted during the international search (name of data base and, where practicable, search terms used) |
| --- |
| **Espacenet; Derwent World Patents Index (DWPI)** |

| C. DOCUMENTS CONSIDERED TO BE RELEVANT | | |
| --- | --- | --- |
| Category* | Citation of document, with indication, where appropriate, of the relevant passages | Relevant to claim No. |
| X | WO 2012039668 A1 (STORA ENSO OYJ [FI])<br>29 March 2012 (2012-03-29)<br>Abstract, amended  3 and  lines 23 and 24 from page 3, lines  18 to 23 from page  6,  line  15  from page  8, exampl of page  12, and line 11 from page  13 from description . | 1 - 13 |
| X | WO 2017044676 A1 (UNIV OF MAINE SYSTEM BOARD OF TRUSTEES [US])<br>16 March 2017 (2017-03-16)<br>Abstract, amended      1, 2, 5, 6 and 18, and **Paragraphs** [0027], [0032], [0036], [0040] and  [0059] from description . | 1 - 13 |
| X | WO 2017192476 A1 (API IP HOLDINGS LLC[US])<br>09 November 2017 (2017-11-09) | 12 e 13 |
| A | Abstract and amended  4. | 1 - 11 |

| [X]  Further documents are listed in the continuation of Box C. | [X]  See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **01 July 2019 (01.07.2019)** | **22 August 2019 (22.08.2019)** |

| Name and mailing address of the ISA/**BR**<br>INSTITUTO NACIONAL DA<br>PROPRIEDADE INDUSTRIAL<br>**INPI** Rua Mayrink Veiga nº 9, 6º andar<br>cep: 20090-910, Centro - Rio de Janeiro/RJ<br>Facsimile No. +55 21 3037-3663 | Authorized officer<br><br>**Jeferson Monteiro Rosa**<br>Telephone No.    +55 21 3037-3493/3742 |

Form PCT/ISA/210 (second sheet) (January 2015)

**INTERNATIONAL SEARCH REPORT**

| International application No. |
| --- |
| PCT/BR2019/050183 |

**C (Continuation). DOCUMENTS CONSIDERED TO BE RELEVANT**

| Category* | Citation of document, with indication, where appropriate, of the relevant passages | Relevant to claim No. |
| --- | --- | --- |
| X | CN 108560316 A (UPM KYMMENE CORP) 21 **September** 2018 (2018-09-21) **Abstract; Translation** *Espacenet* **- Paragraphs** 15 e 41. | 12 e 13 |
| A | | 1 - 11 |

-------------------------------------------

Form PCT/ISA/210 (continuation of second sheet) (January 2015)

**INTERNATIONAL SEARCH REPORT**
Information on patent family members

| International application No. |
|---|
| PCT/BR2019/050183 |

| | | | |
|---|---|---|---|
| WO 2012039668 A1 | 2012-03-29 | BR 112013006626 A2 | 2016-06-28 |
| | | CN 103154366 A | 2013-06-12 |
| | | EP 2619367 A1 | 2013-07-31 |
| | | JP 2013537942 A | 2013-10-07 |
| | | SE 1050985 A1 | 2012-03-23 |
| | | US 2013180680 A1 | 2013-07-18 |
| WO 2017044676 A1 | 2017-03-16 | CA 2997266 A1 | 2017-03-16 |
| | | EP 3347180 A1 | 2018-07-18 |
| | | US 2017072670 A1 | 2017-03-16 |
| WO 2017192476 A1 | 2017-11-09 | US 2017328003 A1 | 2017-11-16 |
| CN 108560316 A | 2018-09-21 | CN 103476990 A | 2013-12-25 |
| | | EP 2665862 A2 | 2013-11-27 |
| | | FI 20115054 A | 2012-07-21 |
| | | FI 126513 B | 2017-01-13 |
| | | JP 2014506634 A | 2014-03-17 |
| | | US 2013292075 A1 | 2013-11-07 |
| | | US 9399838 B2 | 2016-07-26 |
| | | US 2016273165 A1 | 2016-09-22 |
| | | WO 2012098296 A2 | 2012-07-26 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011068457 A

- WO 2010125247 A

**Non-patent literature cited in the description**

- **AHOLA et al.** Cellulose nanofibrils-adsorption with poly (amideamine) epichlorohydrin studied by QCM-D and application to paper strength additive. *Cellulose,* 2008, vol. 15, 303-314